# EUROPEAN PATENT SPECIFICATION

(11) **EP 1 435 748 B1**
(45) Date of publication and mention of the grant of the patent: **29.03.2006**
(21) Application number: 02293276.8
(22) Date of filing: 30.12.2002
(51) Int. Cl.: H04Q 7/38, H04L 29/06, H04L 12/28

(54) **Handover between wireless networks of different technologies**
Weiterreichen zwischen Mobilfunknetzwerken unterschiedlicher Technologien
Transfert entre réseaux mobiles de technologies différentes

(43) Date of publication of application: 07.07.2004
(73) Proprietor: FRANCE TELECOM, 75015 Paris (FR)
(72) Inventor: Pensivy, Stéphane, Twickenham TW1 2LU (GB); Wiltshire, Nick, Hertford, Hertfordshire SG13 7BW (GB); Bonjour, Servane, 35690 Acigne (FR); Atheo, Stéphane, 56000 Vannes (FR)
(74) Representative: DeVile, Jonathan Mark

(56) References cited:
- WO-A-00/38465
- MISRA A ET AL: "Integrating QoS support in teleMIP's mobility architecture" IEEE, 2000, pages 57-64, XP010534013
- PAHLAVAN K ET AL: "HANDOFF IN HYBRID MOBILE DATA NETWORKS" IEEE PERSONAL COMMUNICATIONS, IEEE COMMUNICATIONS SOCIETY, US, vol. 7, no. 2, April 2000 (2000-04), pages 34-47, XP000920361 ISSN: 1070-9916
- MISRA A ET AL: "Hierarchical mobility management for VoIP traffic" MILCOM 2001. PROCEEDINGS. COMMUNICATIONS FOR NETWORK-CENTRIC OPERATIONS: CREATING THE INFORMATION FORCE. MCLEAN, VA, OCT. 28 - 30, 2001, IEEE MILITARY COMMUNICATIONS CONFERENCE, NEW YORK, NY: IEEE, US, vol. 1 OF 2, 28 October 2001 (2001-10-28), pages 372-377, XP010579039 ISBN: 0-7803-7225-5
- MISRA A ET AL: "IDMP-BASED FAST HANDOFFS AND PAGING IN IP-BASED 4G MOBILE NETWORKS" IEEE COMMUNICATIONS MAGAZINE, IEEE SERVICE CENTER. PISCATAWAY, N.J, US, vol. 40, no. 3, March 2002 (2002-03), pages 138-145, XP001102616 ISSN: 0163-6804
- A. MISRA; S. DAS, A. MCAULE,Y A. DUTTA; S. K. DAS: "IDMP: An Intra-Domain Mobility Management Protocol using Mobility Agents; Network Working Group; INTERNET-DRAFT; draft-misra-mobileip-idmp-00.txt" NETWORK WORKING GROUP INTERNET DRAFT, 14 July 2000 (2000-07-14), pages 1-30, XP002239614

## Description

### Field of the Invention

The present invention relates to telecommunications apparatus and methods, which are operable to support data communications with at least one mobile terminal. The present invention also relates to applications servers and mobility managers, and telecommunications interfaces between such applications servers and mobility managers.

Embodiments of the present invention may also provide interfaces for mobility managers via which applications servers may subscribe to receive data indicating a change of affiliation of terminals.

### Background of the Invention

Telecommunications access networks provide a facility for terminals to communicate data with other terminals or applications servers. This facility can support a variety of applications such as voice telephony, downloading or streaming video from a server, multi-media messaging including communicating pictures or downloading pictures, text communications, or any client-server or peer-to-peer type communications.

The Internet protocol (IP) has become a well established protocol for communicating data in the form of packets, known as IP packets. IP is used to provide a facility for communicating data which typically allows a computer terminal to connect to the world wide web and access data at web sites.

Access networks which support mobility using radio communications include for example GSM, CDMAone, IEEE 802.11 and UMTS (3G). These examples of access networks provide a facility for communicating data to mobile terminals using a radio access interface. The radio access interface for any network provides a facility for communicating data in accordance with communications parameters which are determined by a specification for the radio access interface. Generally, since IP has become prevalent as a protocol for communicating data particularly, but not exclusively, in association with internet applications, there is a general desire to provide a communications facility which allows mobile terminals to communicate IP packets via an access network. In order to address this desire a published paper entitled "Hierarchical Mobility Controlled By The Network" by Bertin et al published in Multi-access Mobility and Tele-traffic for Wireless Communications, discloses a mobility manager which provides a facility for initiating and directing the execution of hand-over between base stations of a mobile radio network. The hand-over is executed as a result of information received from the operator, the network and the mobile terminals.

In an article entitled "Integrating QoS support in Tele MIP's Mobility Architecture" by Misra A et al published in IEEE ICPW C'2000, pages 57-64, XP010534013 there is disclosed a differentiated services-based QoS architecture for next-generation wireless networks. The architecture provides a two-level hierarchical mobility management scheme and integrates a bandwidth broker for performing admission control and resource piovisioning for mobile nodes with mobility agents for intra-domain hand-over.

WO 00/38465 discloses an inter-system hand-aver support mechanism which operates in conjunction with a packet data transport mechanism, in which one access network sends a hand-over request message to one or more other access network to which a mobile node may be re-affiliated. The hand-over message includes at least one set of user plane attributes and at least one quality of service (QoS) value. The recipient access network evaluates the QoS user plane attributes to evaluate whether it has sufficient resources to support the user plane QoS attributes. If so, then a connection request message is returned which identifies the QoS which can be supported.

In an article entitled "Handoff in Hybrid Mobile Data Networks" by Pahlavan K et al, published in IEEE Personal Communications, IEEE Communications Society, US, vol. 7, No.2, April 2000 pages 34-47, XP000920361, ISSN 1070-9916, there is disclosed various hand-over architectures and techniques in which a mobile node changes its affiliation from one access network to another access network, in which a quality of service which can be supported on the other access network changes with respect to the access network with respect to which the mobile node is currently affiliated.

### Summary of Invention

According to the present invention there is provided a telecommunications apparatus comprising an applications server and a mobility manager. The applications server is operable to provide a telecommunications service to at least one mobile terminal via at least a first access network and a second access network using an internet protocol in accordance with an application program. The mobility manager is operable to control an affiliation of the mobile terminal with at least one of the first and the second access networks by receiving access network evaluation reports indicating a current status of the mobile terminal and by determining whether a re-affiliation is appropriate in accordance with the received access network evaluation reports. The applications server in combination with the mobility manager is operable to negotiate a change in the telecommunications service as a result of the change in communications parameters associated with the change of affiliation from the first to the second access networks.

Embodiments of the present invention can provide a facility for a mobile terminal to change affiliation, that is to say, for example, hand-over or hand-off from a base station associated with one access network to a base station associated with another access network, with the effect that the mobile terminal is provided with one of a pre-specified set of services which can be supported by the other access network. A change of communication parameters may occur when the mobile terminal changes its affiliation from one access network to another access network. A telecommunications apparatus embodying the present invention can provide a facility for changing the service which is provided to a mobile terminal in accordance with the change in communications parameters associated with the change of network. Communications parameters could be for example a data rate which can be supported (for example, kbits per second), a delay in communications or a packet loss where for example the protocol for maintaining data communications is the Internet Protocol. According to one embodiment, the telecommunications apparatus is operable to communicate in accordance with an Internet Protocol.

The term access network as used herein refers to any telecommunications network, which is arranged to provide a communications facility for mobile terminals. A mobile terminal, which is provided with such a communications facility from an access network, will be understood in this context to be any terminal which may during a call or session change affiliation from one access network to another. Examples of access networks include GSM, Wireless LAN, UMTS, Bluetooth or indeed an access network such as fixed Ethernet, where mobility is provided by physically moving the terminal from one port to another. Through such networks mobile terminals may be provided with access to an Internet Protocol mobility manager.

Embodiments of the present invention can provide services to mobile terminals, including applications, with a reduced likelihood that the applications will crash as a result of a change of affiliation of the mobile terminal to a network providing a lower communications bandwidth. Conversely, mobile users can benefit from an increase in communications bandwidth offered by a network with which a mobile terminal becomes affiliated. This is because the service provided through an applications server is arranged to be adapted when the mobility manager identifies a change of affiliation to a different network.

The mobility manager provides and maintains information identifying the current status of the affiliation of the mobile. The mobility manager controls the change of affiliation of the mobile terminal between one base station and another. Where the mobile terminal changes its affiliation from one access network to another, information representing this change is made available by the mobility manager to the applications server. The applications server receives this information and negotiates a change in service with the mobile terminals in accordance with the change of affiliation. The applications server can therefore subscribe to a mobility manager for mobility information, the mobility information being used by the applications server to adapt services provided to mobile terminals. As such, the mobility manager need only process and send hand-over reports for mobile terminals which are actively involved in a service session. Furthermore, an applications server can make changes to a service session with the effect of making best use of the available access network resources.

In some embodiments, if the change in communications parameters has an effect of reducing the quality of telecommunications service that can be supported then the negotiation of the change in telecommunications service occurs before the change of affiliation of the mobile with the access network. If however the change in communications parameters provides a facility for increasing the quality of telecommunications service that can be supported then the negotiation of the change in telecommunications service occurs after the change of affiliation of the mobile terminal with the access network. Since the application service is already adapted to the lower capacity of the new access network, a likelihood of packet loss after the hand-over has occurred can be reduced. Packet loss during hand-over itself may be minimised because the applications are already in a restricted mode.

As will be appreciated a negotiation of the service supported by the applications server between the mobile terminal and a corresponding terminal may be delayed by the change of affiliation. Accordingly, in a situation where the quality of service is improved with the change of affiliation, then the applications server will be able to at least support the same level of service that was being provided before the change of affiliation. As such, in order to minimise any packet loss as a result of a delay or break in communications resulting from the change of affiliation, the mobile terminal can execute the hand-over and then enter a phase in which the applications server and the mobile terminal negotiate a change of service. Alternatively, in a case where the quality of service provided to the mobile terminal reduces as a result of the change of affiliation from one access network to another access network, then in order to avoid a loss of information as a result of the change, negotiation is conducted between the applications server, the mobility manager and the mobile terminal before the hand-over is performed. Accordingly, a graceful transition from one service to another may be effected, minimising a disturbance to communication between parties to the service.

For example, if an access network operates in accordance with a 3G mobile telephone standard such as UMTS, then the communications parameters available can support services such as video telephony or video streaming. However, if this mobile terminal hands-over to a second generation mobile system such as a GPRS enabled GSM network then the bandwidth provided will not be sufficient to support video telephony or streaming. This is representative of a reduction in the quality of service that can be supported. Accordingly, the applications server will be operable to negotiate a change in service to an alternative service such as audio conferencing or text exchange in accordance with an instant messaging type application. The applications server could be a web server which displays a text version of a web page to a mobile terminal affiliated to a GSM network and a full colour version with pictures when the mobile terminal is affiliated to a Wireless LAN network.

In some embodiments the applications server may include an interface to an associated database and optionally the database as part of the applications server. The data stored in the date base may include an identification of the mobile terminals which are included in a session (also referred to as a call) and a preference of services which are to be provided to the mobile terminals during the session. The data may also indicate the communications parameters associated with each access network via which the mobile terminals may communicate data. When a change of affiliation of a mobile terminal from a first access network to a second access network occurs, affiliation change data indicative of this change is communicated to the applications server by the mobility manager. Accordingly, the applications server can determine the change in communications parameters from the data stored in the database and the first and the second access networks identified in the affiliation change data.

In other embodiments the mobility manager includes an interface to an associated database and optionally the database as part of the mobility manager. The data stored in the database may include an identification of the mobile terminals and the communications parameters associated with each access network via which the mobile terminals may communicate data. When a change of affiliation of a mobile terminal from a first access network to a second access network occurs, affiliation change data indicative of this change is generated by the mobility manager and communicated to the applications server. The affiliation change data provides an indication of the mobile terminal which has changed affiliation and the change in communications parameters determined from the communications parameters for the first and the second access networks.

According to an aspect of the invention there is provided a mobility manager for use with an applications server, the mobility manager comprising a communications interface for sending and receiving data via a communications network to at least one mobile terminal and the applications server. The mobility manager includes a mobility controller operable to monitor an affiliation of the mobile terminal with at least one of first and second access networks, to generate affiliation change data indicative of a change of affiliation of the mobile terminal. The mobility controller communicates the affiliation change data to the applications server.

According to another aspect of the invention there is provided an interface for a mobility manager the interface providing a facility for an applications server to subscribe to affiliation change data. The affiliation change data is indicative of a change of affiliation of a mobile terminal between at least one of a first and second access networks, the affiliation change data being provided by the mobility manager. In some embodiments the affiliation change data includes information indicative of a change in communications parameters available via the network with which the mobile terminal is affiliated. An applications server may therefore subscribe to the interface for mobility information. A response to an initial subscription can be used to commence communications in a manner suitable to access network capacity.

The term hand-over as used herein should not be taken as implying any particular access technology, but refers generally to a change of affiliation of a mobile terminal from one access network to another. Accordingly, in other embodiments the term hand-off may be substituted. Correspondingly, the term user equipment could be used instead of mobile terminal and Node B could be used in place of base station, where the application refers to 3G.

Various further aspects and features of the present invention are defined in the appended claims and include an applications server, a mobility manager, an interface for a mobility manager, and a telecommunications interface.

### Brief Description of the Drawings

Embodiments of the present invention will now be described by way of example only with reference to the accompanying drawings, where like parts are provided with corresponding reference numerals, and in which:
Figure 1 is a schematic representation of a telecommunications network according to an embodiment of the present invention;
Figure 2 is a schematic block diagram of an example applications server, which appears in Figure 1;
Figure 3 is a schematic block diagram of a mobility manager, which also appears in Figure 1;
Figure 4 provides a simplified representation of the telecommunications network which is shown in Figure 1;
Figure 5 is a schematic flow diagram illustrating a process of initial session registration;
Figure 6 is a schematic flow diagram illustrating a process of session update when participants leave a session;
Figure 7 is a schematic flow diagram illustrating a process of session termination;
Figure 8 is a schematic flow diagram illustrating a process of hand-over changing an affiliation of a mobile terminal, which results in an increase in service level quality; and
Figure 9 is a schematic flow diagram illustrating a process of hand-over changing an affiliation of a mobile terminal, which results in a decrease in service level quality.

### Description of Preferred Embodiments

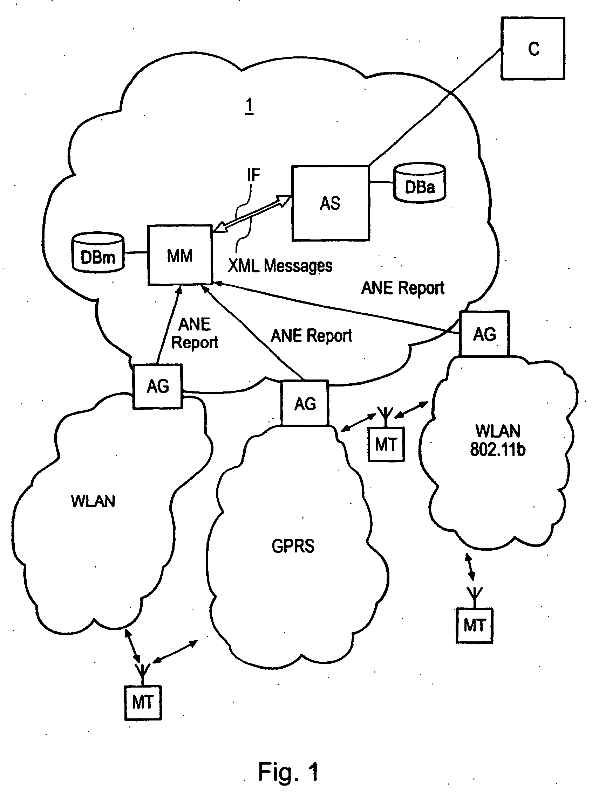

Figure 1 provides an illustration of a system in which embodiments of the present invention can be applied. In Figure 1 a core network 1 includes a mobility manager MM and an applications server AS. The applications server is arranged to provide facilities for telecommunications services to mobile terminals (user entities) MT connected to the applications server via access networks. For example, a mobile terminal MT is arranged to communicate data via either a wireless LAN WLAN operating in accordance with IEEE 802.11 b or a GSM network via an access gateway AG to the core network 1 and then to the applications server AS. Other access networks could be fixed networks, the mobility of the terminal being provided by physically connecting a cable from the terminal to the network.

Each network WLAN, GSM is arranged to communicate with the core network 1 via access gateways AG. The access gateways AG form routers, which are arranged to route data from the networks to the core network and within the core network to the applications server AS. Thus, in one embodiment the routers are IP routers, which are arranged to communicate data from one terminal to a corresponding terminal. The routers are arranged to periodically transmit route advertisement information in order to establish the presence of nodes or servers, which are connected to the network via which IP packets may be routed. The access gateways AG also provide messages to the mobility manager MM using for example Access Network Evaluation ANE reports. Mobile terminals may also send ANE reports directly to the mobility manager MM. The ANE reports from the access gateways AG provide information on the access network that the AG represents and the current status within a communications hierarchy provided in the network where the mobile terminal is attached. The ANE reports from the mobile terminal provide information about the Access network with which the mobile terminal is affiliated, and also other access networks providing coverage within which the mobile terminal may communicate. The mobility manager MM uses information concerning the current affiliation of a mobile terminal MT and information received from the network to direct the hand-over of that mobile terminal to either another base station or another network. The current status of the location of a mobile terminal is stored in a database DBm connected to the mobility manager MM. Thus, the mobility manager MM receives reports from the networks and operates to direct a hand-over of the mobile terminal from one access network to another.

The mobility manager MM provides information as to the current location of a mobile terminal via an interface IF to the applications server AS. In one embodiment the information is provided by eXtensible Mark-up Language XML messages from the mobility manager MM to the applications server AS. Thus, from the information provided by the mobility manager MM the applications server AS can determine whether a change of communication parameters will result if the mobile terminal MT hands over from one access network to another. Communications parameters may include a bit rate, a packet loss rate, a delay between sending and receiving the information and/or other parameters related to a capacity or bandwidth for information carrying which can be supported by the network with which the mobile terminal is affiliated.

The applications server AS may be located at any point within the core network or connected to the core network. The applications server AS provides a facility for providing services to the mobile terminal and/or any other terminal. The other terminal may be mobile or connected to the fixed network. For example, the applications server AS may provide a facility for conference calling. The call within which the services are provided is referred to in the following description as a session. The service provided within the session may for example include video conferencing, audio conferencing or text conferencing for example in accordance with an instant messaging application.

During a session registration process the mobile terminal establishes a set of services which the mobile terminal wishes to utilise depending upon the communications parameters which are available to the mobile terminal via the available access networks WLAN, GSM. For example, the mobile terminal MT may set up a conference registration with the applications server AS and may identify one or more other mobile terminals MT and/or a corresponding terminal C, which may be connected to the fixed network. The applications server AS is then arranged to determine which service can be supported in accordance with the available communications parameters. Thus, depending upon whether the mobile tenninal MT hands over from one access network to another will depend on the change of quality of service available. In addition, typically the minimum bandwidth available to one of the members of a conference call will determine which service can be supported. For example, if only ten kilobits per second is available for a mobile terminal communicating via a GSM network then only a voice call can be supported and accordingly only audio conferencing will be conducted with the parties to the session. On the other hand if 500 kilobits per second is available then the mobile terminal may be provided with video conferencing with other members of the session. If there are three parties to the session, two of the parties may continue to conduct a video conference with audio communications and the other party may only be provided with audio communications. If there are just two participants, they would preferably use the same conferencing facilities, but if there are more, it is possible to have different combinations.

Services that could be supported include not only peer-peer communications, but any communications that a mobile user may receive or send, which may benefit from adaptation depending on the characteristics of the access network. Other examples include:
- Watching a movie using streaming - the streaming can be adapted by the applications server to lower quality if the person moves to a different quality network.
- Sending pictures from one user to another (low quality black and white - high quality colour)
- Downloading web pages (text only or full content with pictures)
- Sending files (Zipped or full version)

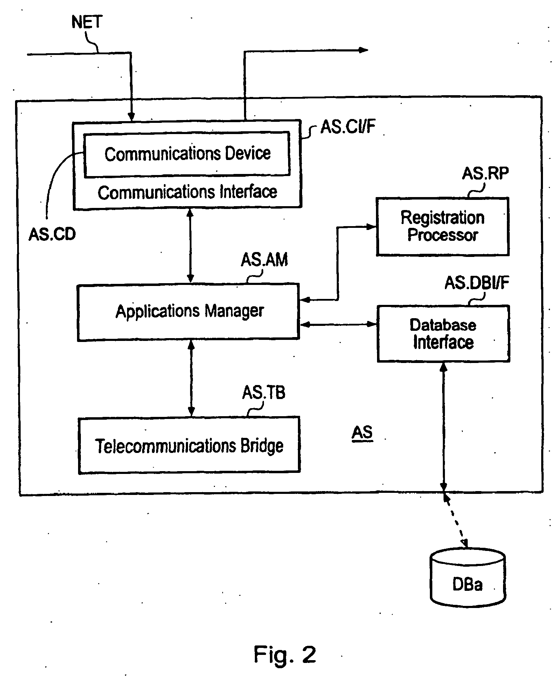

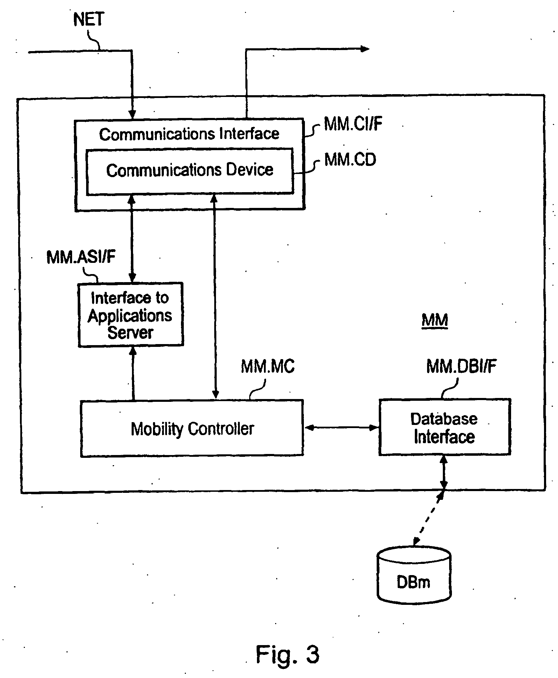

Embodiments of the present invention provide a facility for managing the type of services which are provided to parties to a session in dependence upon the current access network with which mobile terminal is affiliated. In order to provide services in accordance with the communications parameters that are available to support these services, the applications server AS requires knowledge of the current communications parameters which mobile terminals MT have available for communicating during a session. More particularly for the example of a conference call, the applications server needs to determine the communications parameters which any terminal which is party to the session must have for a particular service. Example embodiments of the applications server and the mobility manager appearing in Figure 1, are shown in Figures 2 and 3.

In Figure 2 an example embodiment of the applications server is shown. The applications server AS comprises a communications interface AS.I/F arranged to communicate data via the communications network NET. The communications interface AS.I/F and the network form the telecommunications interface IF which is shown in Figure 1. A communications device AS.CD forms part of the communications interface AS.I/F to communicate data to and from an applications manager AS.AM. The applications manager controls a communications session between terminals including a mobile terminal as will be explained shortly. To provide a conference call facility a telecommunications bridge AS.TB is connected to the applications manager AS.AM. To provide a registration for a plurality of services to be provided during a session in a registered order, the applications server includes a registration processor AS.RP. The registration processor AS.RP provides a facility for a mobile terminal to register a session and to identify in accordance with a desired preference services, which should be provided during the session. To provide a repository for data identified during the session registration process, a database DBa, which is accessed via a database interface AS.DB. The database interface AS.DB provides a facility for storing data in and retrieving data from the database DBa. Furthermore, in some embodiments the database DBa may include an indication of the communications parameters which may be provided on each network via which a mobile terminal may communicate. However, in alternative embodiments this data may also be provided in the database DBm associated with the mobility manager.

Figure 3 provides an illustration of an example mobility manager. In Figure 3, the mobility manager MM includes a communications interface MM.CI/F for sending and receiving data via the communications network NET. The communications interface MM.I/F and the network NET form part of the telecommunications interface IF shown in Figure 1. A communications device MM.CD forms part of the communications interface MM.I/F and operates to communicate data to and from a mobility controller MM.MC. The mobility controller is operable to react to reports from the network (mentioned above as ANE reports) to control the affiliation of mobile terminals with base stations forming part of the access networks shown in Figure 1. The affiliation is controlled in accordance with radio access conditions experienced by mobile terminals during a communications session. The mobility manager utilises data stored in the database DBm shown in Figure 1 to direct a change of affiliation of the mobile terminals during a session. The mobility manager MM includes a database interface MM.DBI/F which is arranged to store data in and retrieve data from the database DBm. In some embodiments the database may include data indicative of communications parameters which can be provided via different access networks available to mobile terminals for communicating during a session. As such the mobility manager may generate signalling data messages referred to as affiliation change data to indicate a change of affiliation and a change in the communications parameters which are available for a given mobile terminal. In other embodiments as mentioned above the communications parameters for each network may be provided to the applications server by data stored in the database DBa associated with the applications server. As will be explained shortly, the mobility manager generates affiliation change data and communicates the affiliation change data to the applications server.

In some embodiments the mobility manager includes an interface for applications servers MM.ASI/F. The interface MM.ASI/F provides a facility to communicate the affiliation change data to applications servers, which have subscribed to the mobility manager via this interface. The interface therefore includes a facility for exchanging signals with the applications servers to subscribe to the interface for mobility information. The interface also connects to the mobility controller for accessing this mobility information, which is then reported to applications servers, which have subscribed to the mobility manager.

### Summary of Acronyms Used

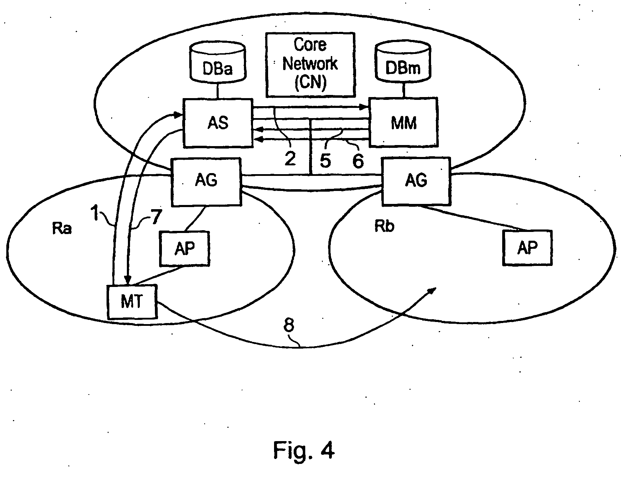

To assist in the explanation of the operation of the applications server AS and the mobility manager MM, Figure 4 provides a part schematic part flow diagram of a simplified representation of the telecommunications network shown in Figure 1, which will be used to illustrate embodiments of the invention. To facilitate understanding the acronyms used in the following description as illustrated in Figure 4, are summarised as follows:
AS: Applications server, manages terminal applications and re-negotiates parameters in active sessions. It is connected to the mobility manager as well as the terminals to convey the application signalling and to allow session re-negotiation.
Remark: Application signalling (SIP for example) directly links MTs to the AS
MM: Mobility Manager, updates the database DBm and is aware of current access network and future access network changes for terminals registered in its domain.
DBa Applications Database, is connected to the AS and contains information relating to the applications (identifying terminals taking part in a session, needs of applications, current access network capacity).
DBm MM Database, contains the identities of subscribed mobile terminals and the capacity of current and all potential access networks. The "current" access network is provided because when the Applications Manager registers a session, the MM replies with details of the current access network. This information is not only used in hand-over, but also in establishing the session. As such, the session can be established not only according to user preferences, but also taking into account the access network characteristics. The above four elements typically form part of the core network, to which the access networks, Na and Nb are attached via Access Gateways AG.
AP: Access Points, provide the radio level attachment for mobile terminals and connect to an access network router.
MT: Mobile Terminal.
Hand-over: The hand-over is decided and controlled by the mobility manager.
Session: A session is managed by the applications server. The applications server is provided with the addresses of participating terminals as well as the characteristics of applications implemented between the terminals.

### Detailed Description of an Example Implementation

The applications server and mobile terminals communicate to establish, re-negotiate and terminate sessions. For example the Session Initiation Protocol (SIP) may be used to establish, re-negotiate and terminate sessions. The mobility manager has access to information on the capacity of all access networks which it manages, via the database DBm. In one embodiment the mobility manager MM is an Enhanced MIPv6 home agent. The mobility manager decides to perform a hand-over for a mobile terminal based on a hand-over decision algorithm.

The hand-over instruction is transmitted to the mobile terminal. In one embodiment the MIPv6 extended protocol is used to communicate the hand-over instructions. The core network may also be an IPv6 network, one of the access networks may be a GPRS network and the other may be a WLAN 802.11 b network. For this embodiment, the mobile terminal has two physical interfaces, GPRS and 802.11b.

### Description of the Communications Protocol between the AS and the MM

Communication between the applications server AS and the mobility manager MM is facilitated by using a protocol which includes four commands; Session Creation, Session Update, Session Termination and Hand-over Notification. These commands and the messages associated are described in the following sections. The parameters in grey in the following tables may be omitted.

### The subscription message

### From the AS to the MM

A format of a subscription message sent from the applications server AS to the mobility manager MM is presented in the following table:

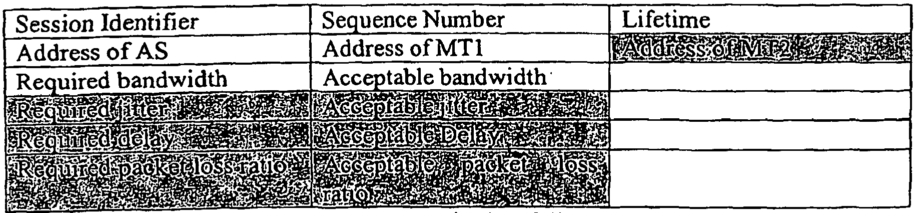

Parameters in the table are summarised as follows:

*Session Identifier* is a number, unique to the AS, which identifies the session.

*Sequence Number* allows the MM to recognise the loss of a message.

*Lifetime* makes it possible to delete the session when it reaches zero.

*Address of AS* is an address, which allows the MM to identify which AS, sent the message.

*Address of MT1, MT2,* .. are the IPv6 addresses of terminals which participate in a session.

*Required bandwidth* is the optimal bandwidth for the applications in the session

*Acceptable bandwidth* is the bandwidth under which the applications will cease to function, resulting in the loss of the session.

*Required jitter* is the optimal jitter for the applications in the session.

*Acceptable jitter* is the jitter above, which the application will cease to function, resulting in the loss of the session.

*Required delay* is the optimal delay for the applications in the session.

*Acceptable delay* is the delay above, which the applications ceases to function, resulting in the loss of the session.

*Required packet loss ratio* is the optimal packet loss ratio for the application in the session.

*Acceptable packet loss ratio* is the packet loss ratio above which the application cannot function, resulting in a loss of the session.

### Session creation instruction.

In order to create a session, the AS sends a subscription message to the MM; this occurs each time a session is created. The terminals are identified by their home IPv6 address and the session is identified by session identification generated by the AS. The sequence number is set to 1. The session creation instruction is a subscription to the MM, telling the MM to update the AS with any hand-over associated with the subscribed mobile terminals.

### Session Update Instruction

A session update instruction is also generated by the AS, which sends a subscription message to the MM and occurs when a session has been modified, for example, if a new terminal has joined the session. Any session parameters can be modified as a result of a session update instruction. The only difference between this and the previous command is that the subscription message has a sequence number greater than one.

### Session Termination Instruction

The AS also uses the subscription message for the session termination instruction, sending termination instruction to the MM. This instruction is sent when the session has been terminated. In this case, the subscription message only contains the session identifier, the sequence number and the lifetime set to zero.

### Subscription Response Message

A subscription response message is sent by the MM to the AS in response to each subscription message received. A format of the response message is presented in the table below:

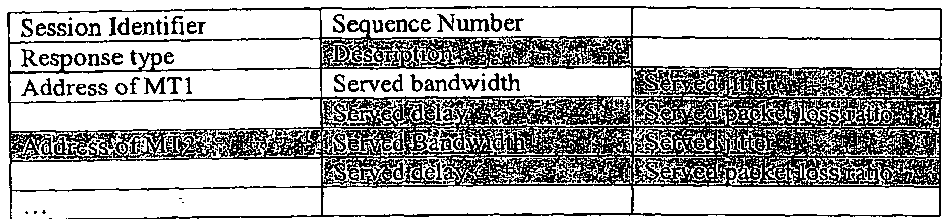

Parameters in the table are suminarised as follows:

*Response type* indicates whether or not the command has been accepted

*Description* gives the details of the reason for a rejection of the instruction - for example "MT address not known by the MM"

*Bandwidth, jitter, delay and packet loss ratio* indicate the capacities of the access networks to which the participant MTs are connected. These parameters are those which are contained in the MM database.

### Hand-over notification message

### From the MM to the AS

A hand-over notification message is provided with a format as shown in the following table:

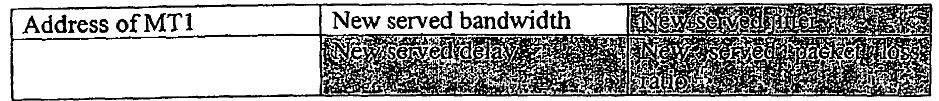

Parameters in the table are summarised as follows:

*New served bandwidth, jitter, delay and packet loss ratio give the capacities of future access networks to which the MT will attach.*

### Hand-over Notification Message

The MM sends a hand-over notification message to the AS when the mobile terminal (identified by the address MT1) is going to perform a hand-over but before the hand-over instruction is sent to the mobile terminal. The message parameters contain the capacities of the future access network for MT1. These parameters are those which are contained in the MM database. These parameters are also used after a hand-over in the case of an increase in quality of service that can be supported, to confirm that the hand-over has been completed and that the re-negotiation of session parameters can occur.

### Hand-over Notification Response Message

A hand-over notification response message is sent by the AS to the MM in response to each hand-over notification message received. A format of the hand-over response message is presented in the following table:

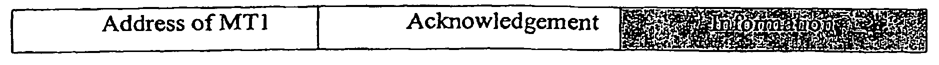

Parameters in the table are summarised as follows:

*Acknowledgement* indicates if the hand-over notification message was understood.

*Information* gives the details of negative acknowledgements for example "MT address unknown".

### Change of Service with Hand-over

The following scenarios describe a process through which a service provided to mobile terminals during a session is adjusted in accordance with a change in communications parameters.

### Key to diagrams

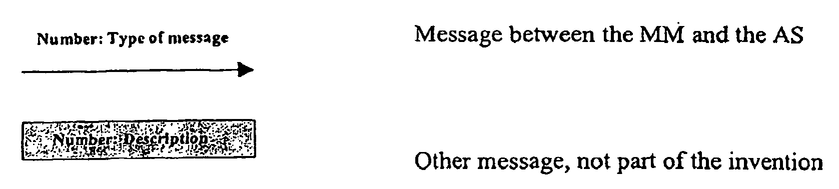

### Initial Session Registration

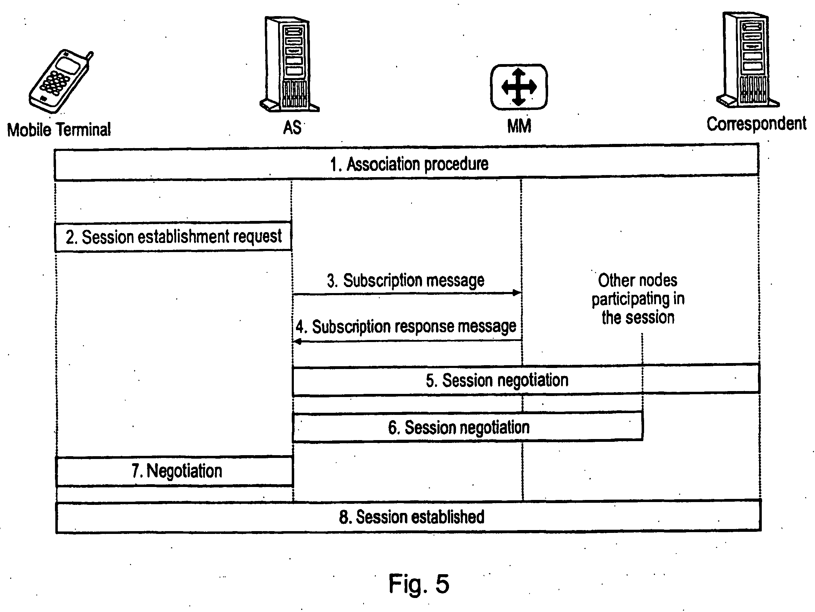

Initialisation of a session is illustrated in the flow diagram of Figure 5. When a session starts, the AS registers this session with the MM in order to receive mobility information about the mobile terminals participating in the session. Figure 5 provides illustrates the process of session registration.
1. It is assumed that the MT is registered with the MM and is attached to one of the access networks managed by the MM.
2. When an MT wants to establish a session, a request is initiated by the MTs application and is sent to the AS which contains the information about the correspondents.
3. At this point, the AS has access to enough information on application parameters for the session and tenninals participating in the session to make a session set-up request to the MM. For this purpose a subscription message is used, an example of which is given below: 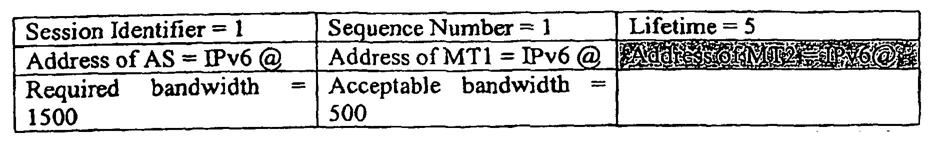
   The MM accesses its associated database DBa and retums a subscription response message to the AS containing the capacities of access networks to which the MTs are attached. An example of the subscription response message is given below: 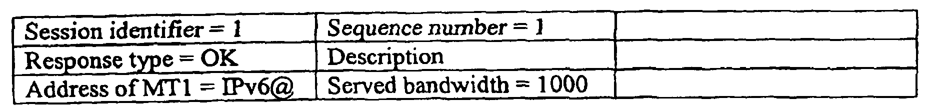 Points to note:
   - The session number and the sequence number are identical to those contained in the subscription message.
   - The mobile terminals, which are not registered with the MM, are not indicated in the response. This implies that the AS must make assumptions about the access networks to which these are attached (as in the case of the correspondent in our example)
   - The units of bandwidth are kbits/s.
4. The AS uses access network parameters supplied by the MM to negotiate the applications parameters with the participants, starting with a correspondent terminal.
5. If there are other session participants, negotiations with them follow.
6. Finally, the negotiation is finished with the initiating mobile terminal.
7. When all the parties are in agreement, the application parameters are acknowledged and the session can be established.

### Session Update When Participants Leave the Session.

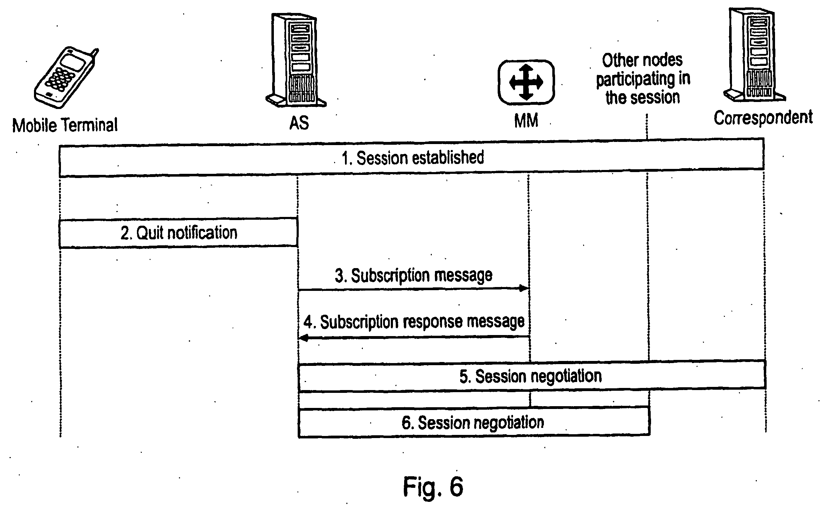

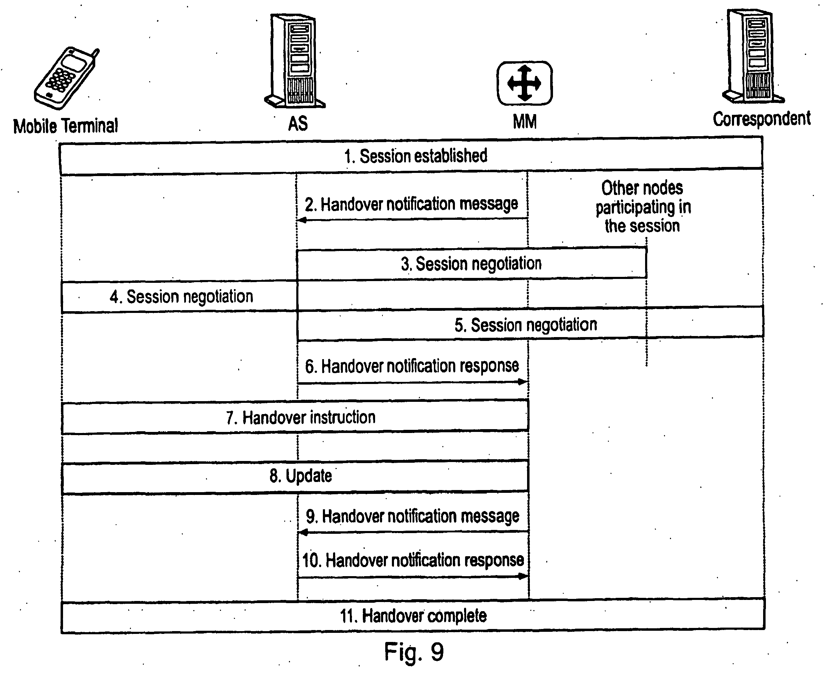

Session update performed when a terminal leaves a session is illustrated by the flow diagram in Figure 6. When one or more participants leave the session, the AS must inform the MM of the changes. This allows the MM to update its database DBm and to ensure that it only sends hand-over notification messages concerning terminals still involved in the session. The steps illustrated by the flow diagram of Figure 6 are described as follows:
1. The session is established.
2. The mobile terminal application wants to leave the session and sends a quit notification to the AS.
3. If the departure of the mobile terminal does not result in the necessity to terminate the session, the AS informs the MM that the terminal has left, by sending a session update instruction. For the session update instruction, the AS uses a subscription message as shown in the example below: 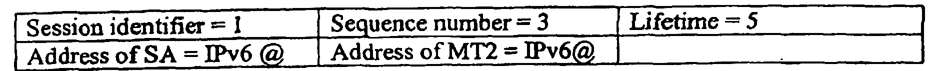 Points to note:
   - The sequence number is greater than one because a sequence number of one indicates the creation of a session and this is a session update.
   - There are no session parameters in the message except for the addresses of terminals still involved in the session because their parameters have not changed.
4. When the MM receives the subscription message, it sends a subscription response message to the AS (Figure 9). An example of this message is shown below: 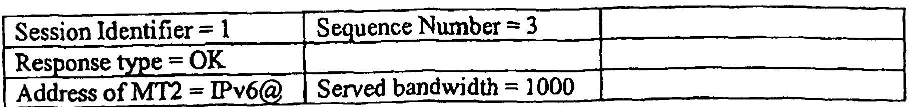 Particular points to note:
   - The session number and sequence number are those which identified the subscription message.
   - The response contains the access network parameters of terminals still involved in the session.
5. & 6. The AS analyses the response of the MM and re-negotiates the applications parameters if necessary in order to take into account the new parameters.

### Session Update When Participants Join the Session

A process performed when a mobile terminal joins an existing session is the same as described in the last section and illustrated by the process represented in Figure 6.
- The AS sends a subscription message to the MM with a list of all the participant mobile terminals including, if necessary, the new application parameters, which are supported by the new mobile terminal to the session.
- The MM sends a subscription response message, which lists the access network parameters of all the mobile terminals involved in the session.

### Session termination

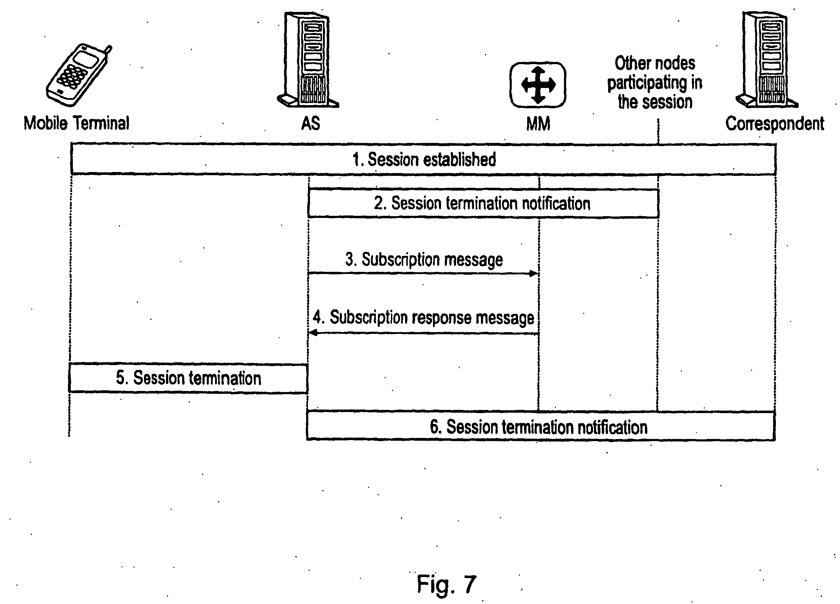

When a session is terminated, the AS informs the MM so it can update its database and avoid sending useless hand-over notification messages to the AS. The flow diagram of Figure 7 illustrates the session termination process.
1. The session is established
2. A session termination notification, originated by one of the participants, is received by the AS.
3. The AS informs the MM by sending the MM a session termination message.
   An example of the message is shown below: 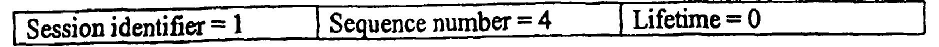 Particular points to note:
   - The sequence number is incremented by one from the last subscription message sent for this session.
   - The lifetime is set to zero.
4. On receipt of this message, the MM updates the database and sends a subscription response message to the AS. An example is given below: 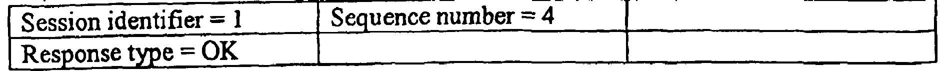
5&6. The AS terminates the session with all the other session participants.

### Hand-over Notification

As explained, the mobility manager MM is responsible for mobility management and for informing the AS about changes in an access network via which registered terminals communicate. This allows the AS to re-negotiate the application parameters, if the hand-over results in a global change of quality available for the session. That is to say, a reduction in quality for one registered mobile terminal can result in a requirement to reduce the quality of the service available to all mobile terminals in the session, where all terminals in the session are to be provided with the same application. This will be the case in a conference call. It is also the responsibility of the MM to decide if the hand-over will result in a positive or negative effect on the session to allow it:
- To inform the AS before the hand-over occurs if the global quality of the session is reduced as a consequence of hand-over. This allows the AS to re-negotiate the applications parameters to take into account this reduced quality before the hand-over actually takes place. For example, a reduction of the bit rate of applications if the future access network does not support the current required bit rate.
- To inform the AS after the hand-over has occurred if the global quality of the session is increased. This ensures that the AS does not try to re-negotiate the application parameters to a higher quality level than the current network permits.

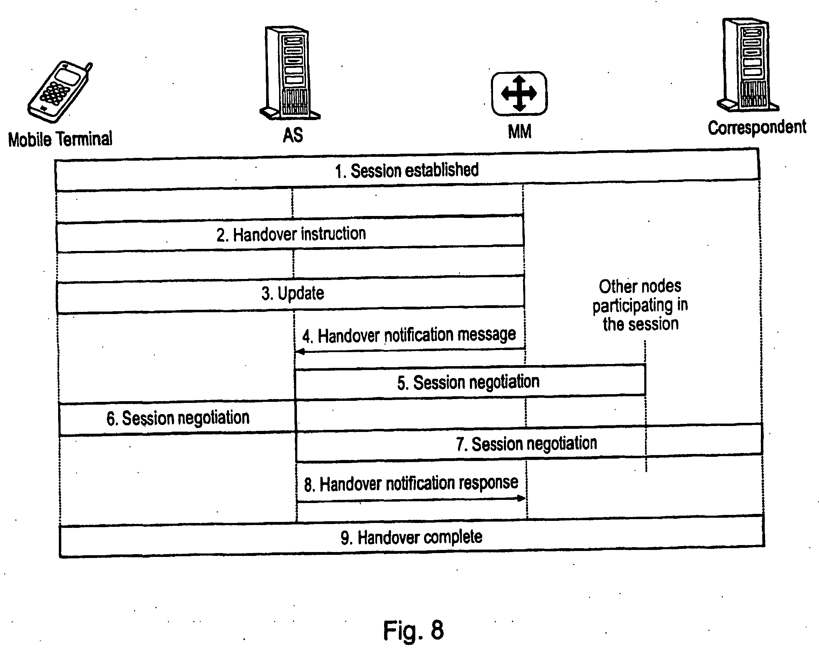

The flow diagrams shown in Figures 8 and 9 illustrate two cases. Figure 8 illustrates a process in which hand-over results in an increase in quality. The steps of operation illustrated in Figure 8 are summarised as follows:
1. The session is established.
2. The MM decides to execute a hand-over, it calculates that the impact on the quality of the session will be positive and hence, decides to inform the AS after having made the hand-over. Therefore, it sends a hand-over instruction to the mobile terminal (A Modified Mobile IPv6 message).
3. The mobile terminal performs the hand-over and informs the MM by sending it an update message (MIPv6 message for example)
4. On receipt of this message, the MM informs the AS of the changes in access network parameters for the mobile terminal by sending it a hand-over notification message. An example of this message is given below: 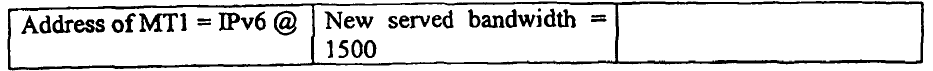
5. 6.&7. The AS re-negotiates the application parameters with all the mobile terminals participating in the session.
8. When the AS receives the final acknowledgement for the re-negotiation, it sends the MM a hand-over notification response (Figure 9). An example of the message is given below: 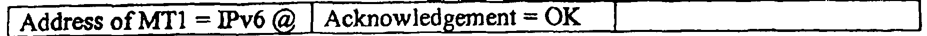
9. The hand-over is complete (Figure 10).

Figure 9 provides an illustrative flow diagram when a change of affiliation results in a drop in quality. The procedure for a hand-over resulting in a decrease in session quality is exactly the same as for the case where the quality increases and so the steps summarised above apply equally to Figure 9. However the following operations are different:
- The Hand-over notification message from the MM to the AS is sent before the hand-over occurs.
- The re-negotiation of the application parameters also occurs before the hand-over.
- The response to a notification sent by the AS is used as a re-negotiation acknowledgement by the MM. This allows the MM to wait for the re-negotiation to be completed before making a hand-over instruction to a lower quality access network.
- The MM sends a second Hand-over notification message when it has received the update from the mobile terminal. This acts as a confirmation to the AS that the hand-over has occurred as expected. If this was not the case, the AS would need to re-negotiate the session between phases 9 and 10.

From the above description of example embodiments, it will be appreciated that embodiments of the present invention can provide the following advantages:
- A terminal can have many simultaneous sessions managed by the AS
- A single session can comprise many applications
- The considered access networks do not have to be of the same technology (homogeneous) or of different technology (heterogeneous)
- In the case of hand-over between two networks of different technologies, the mobile terminal typically has two different interfaces (multi-mode terminal)
- In the case of multi-mode terminals, it is possible to have one application on one access network and another application on the other access network, but in this case, appropriate modification would be needed to the protocol between MM and AS.
- In some embodiments hand-over is not controlled by the network, but is controlled by the mobile terminal, on condition that the MT informs the MM before making the hand-over.

Various modifications may be made to the embodiments described above without departing from the scope of the present invention. Various further aspects and features of the present invention are defined in the appended claims.

## Claims

1. A telecommunications apparatus comprising
an applications server (AS) operable to provide a telecommunications service to at least one mobile terminal (MT) via at least a first access network (Ra) and a second access network (Rb) using an internet protocol in accordance with an application program, and
a mobility manager (MM) operable to control an affiliation of the mobile terminal (MT) with at least one of the first (Ra) and the second access networks (Rb) by receiving access network evaluation reports indicating a current status of the mobile terminal (MT) and by determining whether a re-affiliation is appropriate in accordance with the received access network evaluation reports, wherein the applications server (AS) in combination with the mobility manager (MM) is operable to negotiate a change in the telecommunications service as a result of a change in communications parameters associated with the change of affiliation from the first (Ra) to the second access network (Rb).

2. A telecommunications apparatus as claimed in Claim 1, wherein the mobility manager is operable to generate affiliation change data indicative of a change of affiliation of the mobile terminal between the first and second access networks and to communicate the data to the applications server, and the change of communications parameters associated with the change of affiliation of the mobile terminal from the first access network to the second access network is determined by the applications server in accordance with different parameters for communicating data provided by the first and the second access networks.

3. A telecommunications apparatus as claimed in Claim 1 or 2, wherein, if the change in communications parameters has an effect of reducing a quality of the telecommunications service that can be supported in accordance with a reduction in the communications parameters, the negotiation of the change in the telecommunications service occurs before the change of affiliation of the mobile between the first and the second access networks.

4. A telecommunications apparatus as claimed Claim 1, 2 or 3, wherein, if the change in communications parameters provides a facility for increasing a quality of the telecommunications service that can be supported, the negotiation of the change in the telecommunications service occurs after the change of affiliation of the mobile terminal from the first to the second access networks.

5. A telecommunications apparatus as claimed in any preceding Claim, wherein the negotiation comprises the applications server determining a service that can be supported in accordance with the communications parameters that are available via at least one of the first and the second access networks and generating service change data representative of the change in service and communicating the service change data to the mobile terminal.

6. A telecommunications apparatus as claimed in Claim 5, wherein the applications server includes an applications manager operable to provide a facility for the mobile terminal to establish a plurality of telecommunications services which should be provided in accordance with a predetermined preference, and the service change data includes an indication that the current service from the set will be changed to another service from the set.

7. A telecommunications apparatus as claimed in any preceding Claim, wherein the telecommunications services include one of video conferencing, audio conferencing and text and/or instant messaging, the services being provided to a plurality of mobile terminals.

8. A telecommunications apparatus as claimed in Claim 1, wherein the access network evaluation reports include an indication of a quality of radio communications between the mobile terminal and a base station in the first or the second access networks via which the mobile terminal is communicating.

9. A telecommunications apparatus as claimed in any of Claims 2 to 8, wherein the affiliation change data indicative of a change of affiliation of the mobile terminal from a first to a second access network communicated to the applications server by the mobility manager, provides an indication of a change in communications parameters associated with the change from the first to the second access network, the applications server identifying the change of communications parameters from the affiliation change data.

10. A telecommunications apparatus as claimed in any of Claims 2 to 8, wherein the applications server is provided with a database, the database including data indicative of at least one of
an identification of the at least one mobile terminal associated with a session and the plurality of telecommunications services to be provided during the session between the terminals, and
the communications parameters which can be supported by the first and the second access networks, the applications server being operable to determine the change in communications parameters from the affiliation change data indicative of a change of affiliation of the mobile terminal from the first to the second access networks communicated to the applications server by the mobility manager in combination with the communications parameters provided by the first and the second access networks.

11. An applications server (AS) operable to provide a facility for telecommunications services to at least one mobile terminal (MT) via at least first (Ra) and second access nerworks (Rb) using an internet protocol, the applications server (AS) comprising
a communications interface for sending and receiving data via a communications network to the mobile terminal (MT) in accordance with an application program,
an applications manager (AS) operable to communicate service data via the communications interface for the mobile terminal (MT) in accordance with a first of the plurality of telecommunications services supported by first communications parameters, wherein the applications manager is responsive to affiliation change data, received via the communications interface indicative of a changing of affiliation of the mobile terrninal (MT) form the first (Ra) to the second access network (Rb),
to determine a change in communications parameters associated with communicating the service data with the mobile terminal (MT) via the second access network (Ra),
to identify a different one of the plurality of telecommunications services which can be supported by the second communications parameters, and
to generate service change data for communication via the communications interface to the mobile terminal (MT) to indicate a change of service to the different one the telecommunications services.

12. An applications server as claimed in Claim 11, wherein the change from the first to the second communications parameters is associated with a change of affiliation of the mobile terminal from the first access network to the second access network providing different parameters for communicating data.

13. An applications server as claimed in Claim 12, wherein the change from the first to the second communications parameters has an effect of reducing the quality of the telecommunications service that can be supported, and the applications manager is operable
to receive signalling data via the communications interface from a mobility manager indicative of a pending change of affiliation of the mobile terminal from the first to the second access networks, and
to generate the service change data for communication via the communications interface to the mobile terminal to indicate a change of service to the different telecommunications service before the change of affiliation of the mobile terminal from the first access network to the second access network.

14. An applications server as claimed in Claim 12, wherein the change from the first to the second communications parameters has an effect of increasing the quality of the telecommunications service that can be supported, and the applications manager is operable
to receive signalling data via the communications interface from a mobility manager providing an indication that a change of affiliation has occurred before the change from the first to the second telecommunications services, and
to generate the service change data for communication via the communications interface to the mobile terminal to indicate a change of service to the different telecommunications service after the change of affiliation of the mobile terminal from one access network to the other access network.

15. An applications server as claimed in any of Claims 11 to 14, comprising
a telecommunications bridge operable to exchange data between the mobile terminal and a plurality of other terminals associated with a conference call, the applications manager being operable to utilise the bridge to provide the plurality of the telecommunications services to the mobile terminal and the other terminals in accordance with the conference call.

16. An applications server as claimed in any of Claims 11 to 15, comprising a registration processor operable to provide a facility for the mobile terminal to establish a plurality of telecommunications services which should be provided in accordance with a predetermined preference.

17. An applications server as claimed in any of Claims 11 to 16, comprising an interface to a database, the interface providing a facility for retrieving and storing data in the database, the data providing
an identification of the at least one mobile terminal associated with a session and the plurality of telecommunications services to be provided during the session.

18. An applications server as claimed in Claim 17, wherein the data provides
the first and the second communications parameters which can be supported by the first and the second access networks.

19. An applications server as claimed in Claim 17 or 18, comprising a database coupled to the applications manager via the database interface for providing the data stored therein to the applications manager.

20. An applications server as claimed in any of Claims 11 to 19, wherein the telecommunications services include one of video conferencing, audio conferencing and text and/or instant messaging, the services being provided to a plurality of mobile terminals.

21. An applications server as claimed in any of Claims 11 to 20, wherein the affiliation change data received via the communications interface is indicative of a change of affiliation of the mobile terminal from a first to a second access network, and provides an indication of a change in communications parameters associated with the change from the first to the second access network, the applications manager identifying the change in communications parameters from the affiliation change data.

22. A mobility manager (MM) for use with an applications server (AS) according to any of Claims 11 to 21, the mobility manager (MM) comprising
a communications interface for sending and receiving data via a communications network to at least one mobile terminal (MT) and the applications servers (AS) using an internet protocol,
a mobility controller operable
to control an affiliation of the mobile terminal (MT) with at least one of a first (Ra) and second access networks (Rb) by receiving access network evaluation reports indicating a current status of the mobile terminal (MT) and by determining whether a re-affiliation is appropriate in accordance with the received access network evaluation reports,
to generate affiliation change data indicative of a change of affiliation of the mobile terminal (MT) between the first (Ra) and second (Rb) access network, and
to communicate the affiliation change data to the applications server (AS)

23. A mobility manager as claimed in Claim 22, wherein the mobility manager is responsive to service change data to control the affiliation of the mobile terminal with at least one of the first and the second access networks to effect a change in the telecommunications service as a result of the change in communications parameters associated with the change of affiliation from the first to the second access networks.

24. A mobility manager as claimed in Claim 22 or 23, wherein the mobility controller is responsive to signalling data received from the applications server indicative of a request to change from a first to a second telecommunications service before a change of affiliation from the first to the second access networks, to wait for an indication that a change of service to the second telecommunications service has been effected before controlling the change of affiliation of the mobile terminal from the first access network to the second access network.

25. A mobility manager as claimed in Claim 22 or 23, wherein the mobility controller is responsive to signalling data received from the applications server indicating that a change of affiliation may proceed independently of a change from a first to a second telecommunications service to control the change of affiliation of the mobile terminal from the first access network to the second access network before the change of telecommunications service.

26. A mobility manager as claimed in any of Claims 22 to 25, comprising an interface to a database, the interface providing a facility for retrieving and storing data in the database, the data providing
an identification of the at least one mobile terminal and one of the first and second access networks with which the mobile terminal is affiliated.

27. A mobility manager as claimed in Claim 26, wherein the data includes an indication of the first and the second communications parameters which can be supported by the first and the second access networks.

28. A mobility manager as claimed in Claim 26 or 27, comprising a database coupled to the mobility controller via the database interface for providing the data stored therein to the mobility controller.

29. A mobility manager as claimed in any of Claims 22 to 28, wherein the affiliation change data provides an indication of the change in communications parameters associated with the change from the first to the second access network.

30. An interface for a mobility manager (MM) the interface providing a facility for an applications server (AS) to subscribe to affiliation change data using an internet protocol, the affiliation change data being indicative of a change of affiliation of a mobile terminal (MT) between at least one of first (Ra) and second access networks (Rb) the affiliation change data being provided by the mobility manager (MM).

31. An interface as claimed in Claim 30, wherein the affiliation change data includes information indicative of a change in communications parameters available via the network with which the mobile terminal is affiliated.

32. An interface as claimed in Claim 30 or 31, wherein in response to a subscription from an applications server the interface is operable to communicate signalling data indicative that communications between mobile terminals and the applications server via an access network may commence.

33. An interface as claimed in any of claims 30, 31 or 32, wherein data indicative of at least one of the service change data and the affiliation change data may be communicated between an applications server according to any of Claims 11 to 21 and the mobility manager according to any of Claims 22 to 29.

34. A method of providing a facility for telecommunications services to at least one mobile terminal (MT) via at least one of first (Ra) and second access networks (Rb), the method comprising
providing a telecommunications service to the mobile terminal (MT) via at least of the first access network (Ra) and the second access (Rb) network using an internet protocol in accordance with an application program,
controlling an affiliation of the mobile terminal (MT) with at least one of the first (Ra) and the second access networks (Rb),
receiving access network evaulation reports indicating a current status of the mobile terminal (MT) and determining whether a re-affiliation is appropriate in accordance with the received access network evaluation reports, and
negotiating a change in the telecommunications service as a result of a change in communications parameters associated with the change of affiliation from the first (Ra) to the second access networks (Rb).

35. A method as claimed in Claim 34, wherein the change of communications parameters associated with a change of affiliation of the mobile terminal from the first access network to the second access network is determined by the applications server in accordance with different parameters for communicating data by the first and the second access networks.

36. A method as claimed in Claim 34 or 35, wherein if the change in communications parameters has an effect of reducing the quality of the telecommunications service that can be supported, the negotiating the change in the telecommunications service occurs before the changing the affiliation of the mobile between the first and the second access networks.

37. A method as claimed in Claim 34, 35 or 36, wherein, if the change in communications parameters provides a facility for increasing the quality of the telecommunications service that can be supported, the negotiating the change in the telecommunications service occurs after changing of the affiliation of the mobile tenninal from the first to the second access networks.

38. A method as claimed in any of Claims 34 to 37, wherein the negotiating comprises
determining a service that can be supported in accordance with the communications parameters that are available via at least one of the first and the second access networks, and
signalling the change in service to the mobile terminal.

39. A method as claimed in any of Claims 34 to 38, comprising
establishing a plurality of telecommunications services for the mobile terminal which should be provided in accordance with a predetermined preference, wherein the negotiating includes
signalling to the mobile terminal that the current service from the set will be changed to another service from the set.

40. A method as claimed in any of Claims 34 to 39, wherein the telecommunications services include one of video conferencing, audio conferencing and text and/or instant messaging, the services being provided to a plurality of mobile terminals.

41. A computer program having computer executable instructions, which when loaded on to a data processor configures said data processor to operate as a telecommunications apparatus according to any of Claims 1 to 10, an applications server according to any of Claims 11 to 21, a mobility manager according to any of Claims 22 to 29 or an interface according to any of Claims 30 to 33.

42. A computer program having computer executable instructions, which when loaded on to a data processor causes the data processor to perform the method according to any of Claims 34 to 40.

43. A computer program product having a computer readable medium having recorded thereon information signals representative of the computer program claimed in Claim 41 or 42.

## Patentansprüche

1. Telekommunikationsvorrichtung, welche aufweist:
einen Anwendungsserver (AS), der so betreibbar ist, daß er zumindest einem Mobilfunkterminal (MT) über zumindest ein erstes Zugriffs- bzw. Zugangsnetzwerk (Ra) und ein zweites Zugangsnetzwerk (Rb) unter Verwendung eines Intemetprotokolls in Übereinstimmung mit einem Anwendungsprogramm einen Telekommunikationsdienst bereitstellt, und
einen Mobilitätsmanager (MM), der so betreibbar ist, daß er eine Verbindung des Mobilfunkterminals (MT) mit zumindest entweder dem ersten Zugangsnetzwerk (Ra) oder dem zweiten Zugangsnetzwerk (Rb) steuert, indem er Netzwerkzugriffs-Beurteilungsberichte empfängt, die einen gegenwärtigen Status des Mobilfunkterminals (MT) anzeigen, und indem er in Übereinstimmung mit den empfangenen Netzwerkzugriffs-Beurteilungsberichten bestimmt, ob eine erneute Verbindung angebracht ist, wobei der Anwendungsserver (AS) in Kombination mit dem Mobilitätsmanager (MM) so betreibbar ist, daß er infolge einer Änderung von Kommunikationsparametem, die mit der Änderung bzw. dem Wechsel der Verbindung von dem ersten Zugangsnetzwerk (Ra) zu dem zweiten Zugangsnetzwerk (Rb) verknüpft ist, einen Wechsel des Telekommunikationsdienstes veranlaßt bzw. zustandebringt.

2. Telekommunikationsvorrichtung nach Anspruch 1, wobei der Mobilitätsmanager so betreibbar ist, daß er Verbindungswechseldaten, die einen Wechsel der Verbindung des Mobilfunkterminals zwischen dem ersten und dem zweiten Zugangsnetzwerk anzeigen, erzeugt und die Daten an den Anwendungsserver übermittelt, und die Änderung der Kommunikationsparameter, die mit dem Wechsel der Verbindung des Mobilfunkterminals von dem ersten Zugangsnetzwerk zu dem zweiten Zugangsnetzwerk verknüpft ist, wird durch den Anwendungsserver in Übereinstimmung mit verschiedenen Parametern für das Übermitteln von Daten, die von dem ersten und dem zweiten Zugangsnetzwerk bereitgestellt werden, bestimmt.

3. Telekommunikationsvorrichtung nach Anspruch 1 oder 2, wobei, wenn die Änderung der Kommunikationsparameter eine Auswirkung dergestalt hat, daß die Qualität des Telekommunikationsdienstes, der unterstützt werden kann, entsprechend einer Reduzierung der Kommunikationsparameter vermindert wird, der Wechsel des Telekommunikationsdienstes zustandegebracht wird, ehe der Wechsel der Verbindung des Mobilfunkterminals zwischen dem ersten und dem zweiten Zugangsnetzwerk erfolgt.

4. Telekommunikationsvorrichtung nach Anspruch 1, 2 oder 3, wobei, wenn die Veränderung der Kommunikationsparameter eine Einrichtung zum Steigern der Qualität des Telekommunikationsdienstes, der unterstützt werden kann, bereitstellt, das Veranlassen bzw. Zustandebringen des Wechsels des Telekommunikationsdienstes nach dem Wechseln der Verbindung des Mobilfunkterminals von dem ersten zu dem zweiten Zugangsnetzwerk erfolgt.

5. Telekommunikationsvorrichtung nach einem der vorangegangenen Ansprüche, wobei das Zustandebringen beinhaltet, daß der Anwendungsserver einen Dienst, der unterstützt werden kann, in Übereinstimmung mit den Kommunikationsparametem, die über zumindest entweder das erste oder das zweite Zugangsnetzwerk verfügbar sind, bestimmt und Dienstwechseldaten, die für den Wechsel des Dienstes repräsentativ sind, erzeugt und die Dienstwechseldaten an das Mobilfunkterminal übermittelt.

6. Telekommunikationsvorrichtung nach Anspruch 5, wobei der Anwendungsserver einen Anwendungsmanager beinhaltet, der so betreibbar ist, daß er dem Mobilfunkterminal eine Einrichtung bereitstellt, um eine Mehrzahl von Telekommunikationsdiensten, die in Übereinstimmung mit einer vorbestimmten Präferenz bereitgestellt werden sollen, einzurichten, und wobei die Dienstwechseldaten einen Hinweis darauf enthalten, daß der gegenwärtige Dienst aus dem Satz in einen anderen Dienst aus dem Satz geändert werden wird.

7. Telekommunikationsvorrichtung nach einem der vorangegangenen Ansprüche, wobei die Telekommunikationsdienste entweder Videokonferenzen, Audiokonferenzen und Textnachrichten und/oder Instant Messaging beinhalten und diese Dienste einer Mehrzahl von Mobilfunkterminals zur Verfügung gestellt werden.

8. Telekommunikationsvorrichtung nach Anspruch 1, wobei die Netzwerkzugriffs-Beurteilungsberichte eine Anzeige über die Qualität einer Funkkommunikation zwischen dem Mobilfunkterminal und einer Basisstation in dem ersten oder dem zweiten Zugangsnetzwerk, über welches das Mobilfunkterminal kommuniziert, beinhalten.

9. Telekommunikationsvorrichtung nach einem der Ansprüche 2 bis 8, wobei die Verbindungswechseldaten, die einen Wechsel der Verbindung des Mobilfunkterminals von einem ersten zu einem zweiten Zugangsnetzwerk, der dem Anwendungsserver durch den Mobilitätsmanager mitgeteilt wird, anzeigen, eine Anzeige einer Änderung der Kommunikationsparameter, die mit dem Wechsel von dem ersten zu dem zweiten Zugangsnetzwerk verknüpft sind, bereitstellen, wobei der Anwendungsserver die Änderung der Kommunikationsparameter aus den Verbindungswechseldaten identifiziert.

10. Telekommunikationsvorrichtung nach einem der Ansprüche 2 bis 8, wobei der Anwendungsserver eine Datenbank aufweist, wobei die Datenbank Daten enthält, die zumindest eines der folgenden anzeigen:
eine Identifizierung des zumindest einen Mobilfunkterminals, das mit einer Sitzung verknüpft ist, und der Mehrzahl von Telekommunikationsdiensten, die während der Sitzung zwischen den Terminals bereitzustellen ist, und
die Kommunikationsparameter, die von dem ersten und dem zweiten Zugangsnetzwerk unterstützt werden können, wobei der Anwendungsserver so betreibbar ist, daß er die Änderung der Kommunikationsparameter aus den Verbindungswechseldaten bestimmt, welche einen Wechsel der Verbindung des Mobilfunkterminals von dem ersten zu dem zweiten Zugangsnetzwerk anzeigen, der dem Anwendungsserver durch den Mobilitätsmanager in Kombination mit den Kommunikationsparametem, die von dem ersten und dem zweiten Zugangsnetzwerk bereitgestellt werden, übermittelt wurde.

11. Anwendungsserver (AS), welcher so betreibbar ist, daß er unter Verwendung eines Internetprotokolls zumindest einem Mobilfunkterminal (MT) über zumindest ein erstes Zugangsnetzwerk (Ra) und ein zweites Zugangsnetzwerk (Rb) eine Einrichtung für Telekommunikationsdienste bereitstellt, wobei der Anwendungsserver (AS) folgendes aufweist:
eine Kommunikationsschnittstelle für das Senden und Empfangen von Daten über ein Kommunikationsnetzwerk an das Mobilfunkterminal (MT) in Übereinstimmung mit einem Anwendungsprogramm,
einen Anwendungsmanager (AS), der so betreibbar ist, daß er in Übereinstimmung mit einem ersten aus der Mehrzahl von Tetekommunikationsdiensten, die von ersten Kommunikationsparametem unterstützt werden, Dienstdaten über die Kommunikationsschnittstelle für das Mobilfunkterminal (MT) übermittelt, wobei der Anwendungsmanager auf Verbindungswechseldaten, die über die Kommunikationsschnittstelle empfangen wurden und die einen Wechsel der Verbindung des Mobilfunkterminals (MT) von dem ersten Zugangsnetzwerk (Ra) zu dem zweiten Zugangsnetzwerk (Rb) anzeigen, reagiert,
um eine Änderung der Kommunikationsparameter, die mit dem Übermitteln der Dienstdaten mit dem Mobilfunkterminal (MT) über das zweite Zugangsnetzwerk (Rb) verknüpft ist, zu bestimmen,
um einen anderen aus der Mehrzahl von Telekommunikationsdiensten zu identifizieren, der durch die zweiten Kommunikationsparameter unterstützt werden kann, und
um Dienstwechseldaten zur Übermittlung über die Kommunikationsschnittstelle an das Mobilfunkterminal (MT) zu erzeugen, um einen Wechsel des Dienstes zu dem anderen Telekommunikationsdienst anzuzeigen.

12. Anwendungsserver nach Anspruch 11, wobei der Wechsel von den ersten zu den zweiten Kommunikationsparametem mit einem Wechsel der Verbindung des Mobilfunkterminals von dem ersten Zugangsnetzwerk zu dem zweiten Zugangsnetzwerk verknüpft ist, was verschiedene Parameter für das Übermitteln von Daten bereitstellt.

13. Anwendungsserver nach Anspruch 12, wobei der Wechsel von den ersten zu den zweiten Kommunikationsparametem eine Auswirkung dergestalt hat, daß die Qualität des Telekommunikationsdienstes, der unterstützt werden kann, vermindert wird, und wobei der Anwendungsmanager so betreibbar ist, daß er
Signaldaten, die einen anstehenden Wechsel der Verbindung des Mobilfunkterminals von dem ersten zu dem zweiten Zugangsnetzwerk anzeigen, über die Kommunikationsschnittstelle von einem Mobilitätsmanager empfängt und
die Dienstwechseldaten zur Übermittlung über die Kommunikationsschnittstelle an das Mobilfunkterminal erzeugt, um einen Wechsel des Dienstes zu dem anderen Telekommunikationsdienst anzuzeigen, ehe der Wechsel der Verbindung des Mobilfunkterminals von dem ersten Zugangsnetzwerk zu dem zweiten Zugangsnetzwerk erfolgt.

14. Anwendungsserver nach Anspruch 12, wobei der Wechsel von den ersten zu den zweiten Kommunikationsparametern eine Auswirkung dergestalt hat, daß die Qualität des Telekommunikationsdienstes, der unterstützt werden kann, gesteigert wird, und wobei der Anwendungsmanager so betreibbar ist, daß er
Signaldaten, die einen Hinweis darauf, daß ein Verbindungswechsel stattgefunden hat, ehe der Wechsel von dem ersten zu dem zweiten Telekommunikationsdienst erfolgt ist, bereitstellen, über die Kommunikationsschnittstelle von einem Mobilitätsmanager empfängt und
die Dienstwechseldaten zur Übermittlung über die Kommunikationsschnittstelle an das Mobilfunkterminal erzeugt, um einen Wechsel des Dienstes zu dem anderen Telekommunikationsdienst anzuzeigen, nachdem der Wechsel der Verbindung des Mobilfunkterminals von einem Zugangsnetzwerk zu dem anderen Zugangsnetzwerk stattgefunden hat.

15. Anwendungsserver nach einem der Ansprüche 11 bis 14, welcher aufweist:
eine Telekommunikationsbrücke, die so betreibbar ist, daß Daten zwischen dem Mobilfunkterminal und einer Mehrzahl anderer Terminals, die mittels einer Konferenzschaltung verbunden sind, ausgetauscht werden können, wobei der Anwendungsmanager so betreibbar ist, daß er die Brücke benutzt, um dem Mobilfunkterminal und den anderen Terminals entsprechend der Konferenzschaltung die Mehrzahl der Telekommunikationsdienste bereitzustellen.

16. Anwendungsserver nach einem der Ansprüche 11 bis 15, welcher einen Registrierungsprozessor beinhaltet, der so betreibbar ist, daß er dem Mobilfunkterminal eine Einrichtung bereitstellt, um eine Mehrzahl von Telekommunikationsdiensten, die in Übereinstimmung mit einer vorbestimmten Präferenz zur Verfügung gestellt werden sollen, einzurichten.

17. Anwendungsserver nach einem der Ansprüche 11 bis 16, welcher eine Schnittstelle zu einer Datenbank beinhaltet, wobei die Schnittstelle eine Einrichtung zum Wiedergewinnen und Speichern von Daten in der Datenbank bereitstellt, wobei die Daten folgendes bereitstellen:
eine Identifizierung des zumindest einen Mobilfunkterminals, das mit einer Sitzung verknüpft ist, und der Mehrzahl von Telekommunikationsdiensten, die während der Sitzung bereitgestellt werden sollen.

18. Anwendungsserver nach Anspruch 17, wobei die Daten
die ersten und zweiten Zugangsparameter, die von dem ersten und dem zweiten Zugangsnetzwerk unterstützt werden können, bereitstellen.

19. Anwendungsserver nach Anspruch 17 oder 18, welcher eine Datenbank beinhaltet, die mit dem Anwendungsmanager über die Datenbankschnittstelle verbunden ist, für das Bereitstellen der dort gespeicherten Daten an den Anwendungsmanager.

20. Anwendungsserver nach einem der Ansprüche 11 bis 19, wobei die Telekommunikationsdienste eines von Videokonferenzen, Audiokonferenzen und Textnachrichten und/oder Instant Messaging beinhalten und wobei die Dienste einer Mehrzahl von Mobilfunkterminals bereitgestellt werden.

21. Anwendungsserver nach einem der Ansprüche 11 bis 20, wobei die Verbindungswechseldaten, die über die Kommunikationsschnittstelle empfangen werden, einen Wechsel der Verbindung des Mobilfunkterminals von einem ersten zu einem zweiten Zugangsnetzwerk anzeigen und eine Anzeige einer Änderung der Kommunikationsparameter, die mit dem Wechsel von dem ersten zu dem zweiten Zugangsnetzwerk verknüpft ist, bereitstellen, wobei der Anwendungsmanager die Änderung der Kommunikationsparameter aus den Verbindungswechseldaten identifiziert.

22. Mobilitätsmanager (MM) zur Verwendung mit einem Anwendungsserver (AS) gemäß einem der Ansprüche 11 bis 21, wobei der Mobilitätsmanager (MM) folgendes aufweist:
eine Kommunikationsschnittstelle für das Senden und Empfangen von Daten über ein Kommunikationsnetzwerk an zumindest ein Mobilfunkterminal (MT), und wobei der Anwendungsserver (AS) ein Internetprotokoll verwendet,
eine Mobilitätssteuerung, die so betreibbar ist, daß sie
eine Verbindung des Mobilfunkterminals (MT) mit zumindest entweder einem ersten Zugangsnetzwerk (Ra) oder einem zweiten Zugangsnetzwerk (Rb) steuert, indem sie Netzwerkzugriffs-Beurteilungsberichte, die einen gegenwärtigen Status des Mobilfunkterminals (MT) anzeigen, empfängt und indem sie in Übereinstimmung mit den empfangenen Netzwerkzugriffs-Beurteilungsberichten bestimmt, ob eine erneute Verbindung angebracht ist,
Verbindungswechseldaten, die einen Wechsel der Verbindung des Mobilfunkterminals (MT) zwischen dem ersten Zugangsnetzwerk (Ra) und dem zweiten Zugangsnetzwerk (Rb) anzeigen, erzeugt, und
die Verbindungswechseldaten an den Anwendungsserver (AS) übermittelt.

23. Mobilitätsmanager nach Anspruch 22, wobei der Mobilitätsmanager auf Dienstwechseldaten so reagiert, daß er die Verbindung des Mobilfunkterminals mit zumindest entweder dem ersten oder dem zweiten Zugangsnetzwerk steuert, um infolge der Änderung der Kommunikationsparameter, die mit dem Wechsel der Verbindung von dem ersten zu dem zweiten Zugangsnetzwerk verknüpft ist, einen Wechsel des Telekommunikationsdienstes zu bewirken.

24. Mobilitätsmanager nach Anspruch 22 oder 23, wobei die Mobilitätssteuerung auf Signaldaten, die von dem Anwendungsserver empfangen wurden und die eine Anforderung nach einem Wechsel von einem ersten zu einem zweiten Telekommunikationsdienst, der vor dem Wechsel der Verbindung von dem ersten zu dem zweiten Zugangsnetzwerk erfolgen soll, anzeigen, so reagiert, daß sie auf eine Anzeige, wonach ein Wechsel des Dienstes zu dem zweiten Telekommunikationsdienst erfolgt ist, wartet, ehe sie den Wechsel der Verbindung des Mobilfunkterminals von dem ersten Zugangsnetzwerk zu dem zweiten Zugangsnetzwerk steuert.

25. Mobilitätsmanager nach Anspruch 22 oder 23, wobei die Mobilitätssteuerung auf Signaldaten, die von dem Anwendungsserver empfangen wurden und die anzeigen, daß ein Wechsel der Verbindung unabhängig von einem Wechsel von einem ersten zu einem zweiten Telekommunikationsdienst erfolgen kann, so reagiert, daß sie den Wechsel der Verbindung des Mobilfunkterminals von dem ersten Zugangsnetzwerk zu dem zweiten Zugangsnetzwerk so steuert, daß er vor dem Wechsel des Telekommunikationsdienstes stattfindet.

26. Mobilitätsmanager nach einem der Ansprüche 22 bis 25, welcher eine Schnittstelle zu einer Datenbank beinhaltet, wobei die Schnittstelle eine Einrichtung für das Wiedergewinnen und Speichern von Daten in der Datenbank bereitstellt und wobei die Daten folgendes bereitstellen:
eine Identifizierung des zumindest einen Mobilfunkterminals und entweder des ersten oder des zweiten Zugangsnetzwerks, mit welchem das Mobilfunkterminal verbunden ist.

27. Mobilitätsmanager nach Anspruch 26, wobei die Daten eine Anzeige der ersten und der zweiten Kommunikationsparameter, die von dem ersten und dem zweiten Zugangsnetzwerk unterstützt werden können, beinhalten.

28. Mobilitätsmanager nach Anspruch 26 oder 27, welcher eine Datenbank, die über die Datenbankschnittstelle mit der Mobilitätssteuerung verbunden ist, um der Mobilitätssteuerung die darin gespeicherten Daten zur Verfügung zu stellen, beinhaltet.

29. Mobilitätsmanager nach einem der Ansprüche 22 bis 28, wobei die Verbindungswechseldaten eine Anzeige der Änderung der Kommunikationsparameter, die mit dem Wechsel von dem ersten zu dem zweiten Zugangsnetzwerk verknüpft ist, bereitstellen.

30. Schnittstelle für einen Mobilitätsmanager (MM), wobei die Schnittstelle eine Einrichtung für einen Anwendungsserver (AS) bereitstellt, um unter Verwendung eines Intemetprotokolls Verbindungswechseldaten zu bestellen, wobei die Verbindungswechseldaten einen Wechsel der Verbindung eines Mobilfunkterminals (MT) zwischen mindestens entweder dem ersten Zugangsnetzwerk (Ra) oder dem zweiten Zugangsnetzwerk (Rb) anzeigen und wobei die Verbindungswechseldaten durch den Mobilitätsmanager (MM) bereitgestellt werden.

31. Schnittstelle nach Anspruch 30, wobei die Verbindungswechseldaten Informationen beinhalten, die eine Änderung der Kommunikationsparameter, die über das Netzwerk, mit welchem das Mobilfunkterminal verbunden ist, verfügbar sind, anzeigen.

32. Schnittstelle nach Anspruch 30 oder 31, wobei in Reaktion auf die Bestellung eines Anwendungsservers die Schnittstelle so betreibbar ist, daß sie Signaldaten übermittelt, die anzeigen, daß die Kommunikation zwischen Mobilfunkterminals und dem Anwendungsserver über ein Zugangsnetzwerk beginnen kann.

33. Schnittstelle nach einem der Ansprüche 30, 31 oder 32, wobei Daten, die zumindest entweder die Dienstwechseldaten oder die Verbindungswechseldaten anzeigen, zwischen einem Anwendungsserver gemäß einem der Ansprüche 11 bis 21 und dem Mobilitätsmanager gemäß einem der Ansprüche 22 bis 29 übermittelt werden können.

34. Verfahren zum Bereitstellen einer Einrichtung für Telekommunikationsdienste an zumindest ein Mobilfunkterminal (MT) über zumindest entweder ein erstes Zugangsnetzwerk (Ra) oder ein zweites Zugangsnetzwerk (Rb), wobei das Verfahren folgendes beinhaltet:
Bereitstellen eines Telekommunikationsdienstes an das Mobilfunkterminal (MT) über zumindest entweder das erste Zugangsnetzwerk (Ra) oder das zweite Zugangsnetzwerk (Rb) unter Verwendung eines Internetprotokolls in Übereinstimmung mit einem Anwendungsprogramm,
Steuern der Verbindung des Mobilfunkterminals (MT) mit zumindest entweder dem ersten Zugangsnetzwerk (Ra) oder dem zweiten Zugangsnetzwerk (Rb),
Empfangen von Netzwerkzugriffs-Beurteilungsberichten, die einen gegenwärtigen Status des Mobilfunkterminals (MT) anzeigen, und Bestimmen, ob eine erneute Verbindung angebracht ist, in Übereinstimmung mit den empfangenen Netzwerkzugriffs-Beurteilungsberichten, und
Auswählen eines Wechsels des Telekommunikationsdienstes infolge einer Änderung der Kommunikationsparameter, die mit dem Wechsel der Verbindung von dem ersten Zugangsnetzwerk (Ra) zu dem zweiten Zugangsnetzwerk (Rb) verknüpft ist.

35. Verfahren nach Anspruch 34, wobei die Änderung der Kommunikationsparameter, die mit einem Wechsel der Verbindung des Mobilfunkterminals von dem ersten Zugangsnetzwerk zu dem zweiten Zugangsnetzwerk verknüpft ist, durch den Anwendungsserver in Übereinstimmung mit verschiedenen Parametern für das Übermitteln von Daten durch das erste und das zweite Zugangsnetzwerk bestimmt wird.

36. Verfahren nach Anspruch 34 oder 35, wobei, wenn die Änderung der Kommunikationsparameter eine Auswirkung dergestalt hat, daß die Qualität des Telekommunikationsdienstes, der unterstützt werden kann, vermindert wird, der Wechsel des Telekommunikationsdienstes zustandegebracht wird, ehe der Wechsel der Verbindung des Mobilfunkterminals zwischen dem ersten und dem zweiten Zugangsnetzwerk erfolgt.

37. Verfahren nach einem der Ansprüche 34, 35 oder 36, wobei, wenn die Änderung der Kommunikationsparameter eine Einrichtung zum Steigem der Qualität des Telekommunikationsdienstes, der unterstützt werden kann, bereitstellt, der Wechsel des Telekommunikationsdienstes zustandegebracht wird, nachdem der Wechsel der Verbindung des Mobilfunkterminals von dem ersten zu dem zweiten Zugangsnetzwerk erfolgt ist.

38. Verfahren nach einem der Ansprüche 34 bis 37, wobei das Zustandebringen folgendes beinhaltet:
Bestimmen eines Dienstes, der in Übereinstimmung mit den Kommunikationsparametern, die über zumindest entweder das erste oder das zweite Zugangsnetzwerk verfügbar sind, unterstützt werden kann, und
Signalisieren der Änderung des Dienstes an das Mobilfunkterminal.

39. Verfahren nach einem der Ansprüche 34 bis 38, welches folgendes beinhaltet:
Einrichten einer Mehrzahl von Telekommunikationsdiensten für das Mobilfunkterminal, die in Übereinstimmung mit einer vorbestimmten Präferenz bereitgestellt werden sollen, wobei das Auswählen folgendes beinhaltet:
dem Mobilfunkterminal signalisieren, daß der gegenwärtige Dienst aus dem Satz in einen anderen Dienst aus dem Satz geändert werden wird.

40. Verfahren nach einem der Ansprüche 34 bis 39, wobei die Telekommunikationsdienste Videokonferenzen, Audiokonferenzen oder Textnachrichten und/oder Instant Messaging beinhalten und die Dienste einer Mehrzahl von Mobitfunkterminals bereitgestellt werden.

41. Computerprogramm mit computerausführbaren Anweisungen, die, wenn sie in einen Datenprozessor geladen werden, den Datenprozessor so konfigurieren, daß er als eine Telekommunikationsvorrichtung gemäß einem der Ansprüche 1 bis 10, als ein Anwendungsserver gemäß einem der Ansprüche 11 bis 21, als ein Mobilitätsmanager gemäß einem der Ansprüche 22 bis 29 oder als eine Schnittstelle gemäß einem der Ansprüche 30 bis 33 funktioniert.

42. Computerprogramm mit computerausführbaren Anweisungen, die, wenn sie auf einen Datenprozessor geladen werden, den Datenprozessor dazu bringen, das Verfahren gemäß einem der Ansprüche 34 bis 40 auszuführen.

43. Computerprogrammprodukt mit einem computerlesbaren Medium, auf dem Informationssignale gespeichert sind, die das Computerprogramm gemäß Anspruch 41 oder 42 repräsentieren.

## Revendications

1. Appareil de télécommunications, comprenant :
un serveur d'applications (AS) ayant pour fonction de fournir un service de télécommunications à au moins un terminal mobile (MT) par l'intermédiaire d'au moins un premier réseau d'accès (Ra) et d'un second réseau d'accès (Rb) en utilisant un protocole internet en conformité avec un programme d'application, et
un gestionnaire de mobilité (MM) ayant pour fonction de commander une affiliation du terminal mobile (MT) à au moins l'un des premier (Ra) et second (Rb) réseaux d'accès en recevant des rapports d'évaluation de réseaux d'accès indiquant un état courant du terminal mobile (MT) et en déterminant si une réaffiliation est appropriée en conformité avec les rapports d'évaluation de réseaux d'accès reçus, où le serveur d'applications (AS), en association avec le gestionnaire de mobilité (MM), a pour fonction de négocier un changement du service de télécommunications du fait d'un changement de paramètres de communications associé au changement d'affiliation du premier (Ra) au second (Rb) réseaux d'accès.

2. Appareil de télécommunications selon la revendication 1, dans lequel le gestionnaire de mobilité a pour fonction de générer des données de changement d'affiliation représentatives d'un changement d'affiliation du terminal mobile entre les premier et second réseaux d'accès et de transmettre les données au serveur d'application, et le changement de paramètres de communications associé au changement d'affiliation du terminal mobile du premier réseau d'accès au second réseau d'accès est déterminé par le serveur d'applications en fonction de différents paramètres de communication de données fournis par les premier et second réseaux d'accès.

3. Appareil de télécommunications selon la revendication 1 ou 2, dans lequel, si le changement de paramètres de communications a pour effet de réduire la qualité du service de télécommunications pouvant être pris en charge en conformité avec une diminution des paramètres de communications, la négociation du changement du service de télécommunications se produit avant le changement d'affiliation du mobile entre les premier et second réseaux d'accès.

4. Appareil de télécommunications selon la revendication 1, 2 ou 3, dans lequel, si le changement de paramètres de communications fournit des moyens pour augmenter une qualité du service de télécommunications pouvant être supportés, la négociation du changement de service de télécommunications se produit après le changement d'affiliation du terminal mobile du premier au second réseau d'accès.

5. Appareil de télécommunications selon l'une quelconque des revendications précédentes, dans lequel la négociation comprend le fait que le serveur d'applications détermine un service pouvant être pris en charge en conformité avec les paramètres de communications qui sont disponibles par l'intermédiaire d'au moins l'un des premier et second réseaux d'accès et génère des données de changement de service représentatives du changement de service et communique les données de changement de service au terminal mobile.

6. Appareil de télécommunications selon la revendication 5, dans lequel le serveur d'applications comporte un gestionnaire d'applications ayant pour fonction de fournir une fonctionnalité permettant au terminal mobile d'établir une pluralité de services de télécommunications qui doivent être fournis en conformité avec une préférence prédéterminée, et les données de changement de service comprennent une indication du fait que le service courant provenant de cet ensemble sera changé en un autre service provenant de cet ensemble.

7. Appareil de télécommunications selon l'une quelconque des revendications précédentes, dans lequel les services de télécommunications comprennent l'un de la visioconférence, de l'audioconférence et de la messagerie de type texte et/ou instantanée, les services étant fournis à une pluralité de terminaux mobiles.

8. Appareil de télécommunications selon la revendication 1, dans lequel les rapports d'évaluation de réseaux d'accès comprennent une indication d'une qualité de communications radio entre le terminal mobile et une station de base dans le premier ou le second réseau d'accès par l'intermédiaire duquel le terminal mobile communique.

9. Appareil de télécommunications selon l'une quelconque des revendications 2 à 8, dans lequel les données de changement d'affiliation représentatives d'un changement d'affiliation du terminal mobile d'un premier à un second réseau d'accès communiquées au serveur d'applications par le gestionnaire de mobilité, fournissent une indication d'un changement de paramètres de communications associé au changement du premier au second réseau d'accès, le serveur d'applications identifiant le changement de paramètres de communications à partir des données de changement d'affiliation.

10. Appareil de télécommunications selon l'une quelconque des revendications 2 à 8, dans lequel le serveur d'applications comporte une base de données, la base de données contenant des données représentatives d'au moins l'un :
d'une identification d'au moins un terminal mobile associé à une session et à la pluralité de services de télécommunications devant être fournis pendant la session entre les terminaux, et
des paramètres de communications qui peuvent être pris en charge par les premier et second réseaux d'accès, le serveur d'applications ayant pour fonction de déterminer le changement de paramètres de communications à partir des données de changement d'affiliation représentatives d'un changement d'affiliation du terminal mobile du premier au second réseau d'accès, transmises au serveur d'applications par le gestionnaire de mobilité en association avec les paramètres de communications fournis par les premier et second réseaux d'accès.

11. Serveur d'applications (AS) ayant pour fonction de fournir une fonctionnalité de services de télécommunications à au moins un terminal mobile (MT) par l'intermédiaire d'au moins un premier (Ra) et d'un second (Rb) réseau d'accès en utilisant un protocole internet, le serveur d'applications (AS) comprenant :
une interface de communications pour envoyer et recevoir des données par l'intermédiaire d'un réseau de communications au terminal mobile (MT) en conformité avec un programme d'applications,
un gestionnaire d'applications (AS) ayant pour fonction de transmettre des données de services par l'intermédiaire de l'interface de communications au terminal mobile (MT) en conformité avec un premier de la pluralité de services de télécommunications pris en charge par des premiers paramètres de communications, dans lequel le gestionnaire d'applications est sensible à des données de changement d'affiliation reçues par l'intermédiaire de l'interface de communications, représentatives d'un changement d'affiliation du terminal mobile (MT) du premier (Ra) au second (Rb) réseau d'accès,
pour déterminer un changement de paramètres de communications associé à la communication des données de services au terminal mobile (MT) par l'intermédiaire du second réseau d'accès (Rb),
pour identifier l'un, différent, de la pluralité de services de télécommunications qui peuvent être pris en charge par les seconds paramètres de communications, et
pour générer des données de changement de service devant être communiquées par l'intermédiaire de l'interface de communications au terminal mobile (MT) pour indiquer un changement de services à celui qui est différent des services de télécommunications.

12. Serveur d'applications selon la revendication 11, dans lequel le changement des premiers aux seconds paramètres de communications est associé à un changement d'affiliation du terminal mobile du premier réseau d'accès au second réseau d'accès fournissant des paramètres différents pour la transmission de données.

13. Serveur d'applications selon la revendication 12, dans lequel le changement des premiers aux seconds paramètres de communications a pour effet de réduire la qualité du service de télécommunications pouvant être pris en charge, et le gestionnaire d'applications a pour fonction :
de recevoir des données de signalisation par l'intermédiaire de l'interface de communications d'un gestionnaire de mobilité, celle-ci étant représentative d'un changement d'affiliation en cours du terminal mobile du premier au second réseau d'accès, et
de générer les données de changement de service devant être communiquées par l'intermédiaire de l'interface de communications au terminal mobile pour indiquer un changement de service à l'autre service de télécommunications avant le changement d'affiliation du terminal mobile du premier réseau d'accès au second réseau d'accès.

14. Serveur d'applications selon la revendication 12, dans lequel le changement des premiers aux seconds paramètres de communications a pour effet d'augmenter la qualité du service de télécommunications pouvant être pris en charge, et le gestionnaire d'applications a pour fonction :
de recevoir des données de signalisation par l'intermédiaire de l'interface de communications d'un gestionnaire de mobilité fournissant une indication qu'un changement d'affiliation s'est produit avant le changement du premier au second service de télécommunications, et
de générer les données de changement de service devant être communiquées par l'intermédiaire de l'interface de communications au terminal mobile pour indiquer un changement de service à l'autre service de télécommunications après le changement d'affiliation du terminal mobile d'un réseau d'accès à l'autre réseau d'accès.

15. Serveur d'applications selon l'une quelconque des revendications 11 à 14, comprenant un pont de télécommunications ayant pour fonction d'échanger des données entre le terminal mobile et une pluralité d'autres terminaux associés à un appel de conférence, le gestionnaire d'applications ayant pour fonction d'utiliser le pont afin de fournir la pluralité des services de télécommunications au terminal mobile et aux autres terminaux en conformité avec l'appel de conférence.

16. Serveur d'applications selon l'une quelconque des revendications 11 à 15, comprenant un processeur d'enregistrement ayant pour fonction de fournir une fonctionnalité permettant au terminal mobile d'établir une pluralité de services de télécommunications qui doivent être fournis en conformité avec une préférence prédéterminée.

17. Serveur d'applications selon l'une quelconque des revendications 11 à 16, comprenant une interface de base de données, l'interface fournissant une fonctionnalité permettant d'extraire et de stocker des données dans la base de données, les données fournissant :
une identification dudit au moins un terminal mobile associé à une session et à la pluralité de services de télécommunications devant être fournis pendant la session.

18. Serveur d'applications selon la revendication 17, dans lequel les données fournissent :
les premiers et les seconds paramètres de communications pouvant être pris en charge par les premier et second réseaux d'accès.

19. Serveur d'applications selon la revendication 17 ou 18, comprenant une base de données reliée au gestionnaire d'applications par l'intermédiaire de l'interface de base de données pour fournir les données qui y sont stockées au gestionnaire d'applications.

20. Serveur d'applications selon l'une quelconque des revendications 11 à 19, dans lequel les services de télécommunications comprennent l'une de la visioconférence, de l'audioconférence et de la messagerie de type texte et/ou instantanée, les services étant fournis à une pluralité de terminaux mobiles.

21. Serveur d'applications selon l'une quelconque des revendications 11 à 20, dans lequel les données de changement d'affiliation reçues par l'intermédiaire de l'interface de communications sont représentatives d'un changement d'affiliation du terminal mobile d'un premier à un second réseau d'accès, et fournissent une indication d'un changement de paramètres de communications associé au changement du premier au second réseau d'accès, le gestionnaire d'applications identifiant le changement de paramètres de communications à partir des données de changement d'affiliation.

22. Gestionnaire de mobilité (MM) destiné à être utilisé avec un serveur d'applications (AS) selon l'une quelconque des revendications 11 à 21, le gestionnaire de mobilité (MM) comprenant :
une interface de communications pour envoyer et recevoir des données par l'intermédiaire d'un réseau de communications à au moins un terminal mobile (MT) et du serveur d'applications (AS) en utilisant un protocole internet,
une unité de commande de mobilité ayant pour fonction :
de commander une affiliation du terminal mobile (MT) à au moins l'un d'un premier (Ra) et d'un second (Rb) réseau d'accès en recevant des rapports d'évaluation de réseaux d'accès indiquant un état courant du terminal mobile (MT) et en déterminant si une réaffiliation est appropriée en conformité avec les rapports d'évaluation de réseaux d'accès reçus,
de générer des données de changement d'affiliation représentatives d'un changement d'affiliation du terminal mobile (MT) entre le premier (Ra) et le second (Rb) réseau d'accès, et
de communiquer les données de changement d'affiliation au serveur d'applications (AS).

23. Gestionnaire de mobilité selon la revendication 22, dans lequel le gestionnaire de mobilité est sensible à des données de changement de service pour commander l'affiliation du terminal mobile à au moins l'un des premier et second réseaux d'accès afin d'effectuer un changement de service de télécommunications du fait du changement de paramètres de communications associé au changement d'affiliation du premier au second réseau d'accès.

24. Gestionnaire de mobilité selon la revendication 22 ou 23, dans lequel l'unité de commande de mobilité est sensible à des données de signalisation reçues du serveur d'applications, représentatives d'une demande de changement d'un premier à un second service de télécommunications avant un changement d'affiliation du premier au second réseau d'accès, pour attendre une indication du fait qu'un changement de service au second service de télécommunications a été effectué, avant de commander le changement d'affiliation du terminal mobile du premier réseau d'accès au second réseau d'accès.

25. Gestionnaire de mobilité selon la revendication 22 ou 23, dans lequel l'unité de commande de mobilité est sensible à des données de signalisation reçues du serveur d'applications, indiquant qu'un changement d'affiliation peut s'effectuer indépendamment d'un changement d'un premier à un second service de télécommunications pour commander le changement d'affiliation du terminal mobile du premier réseau d'accès au second réseau d'accès avant le changement de service de télécommunications.

26. Gestionnaire de mobilité selon l'une quelconque des revendications 22 à 25, comprenant une interface de base de données, l'interface fournissant une fonctionnalité permettant d'extraire et de stocker des données dans la base de données, les données fournissant :
une identification dudit au moins un terminal mobile et de l'un des premier et second réseaux d'accès auxquels le terminal mobile est affilié.

27. Gestionnaire de mobilité selon la revendication 26, dans lequel les données comprennent une indication des premiers et des seconds paramètres de communications pouvant être pris en charge par les premier et second réseaux d'accès.

28. Gestionnaire de mobilité selon la revendication 26 ou 27, comprenant une base de données reliée à l'unité de commande de mobilité par l'intermédiaire de l'interface de base de données pour fournir les données qui y sont stockées à l'unité de commande de mobilité.

29. Gestionnaire de mobilité selon l'une quelconque des revendications 22 à 28, dans lequel les données de changement d'affiliation fournissent une indication du changement de paramètres de communications associé au changement du premier au second réseau d'accès.

30. Interface pour gestionnaire de mobilité (MM), l'interface fournissant une fonctionnalité permettant à un serveur d'applications (AS) de s'abonner à des données de changement d'affiliation en utilisant un protocole internet, les données de changement d'affiliation étant représentatives d'un changement d'affiliation d'un terminal mobile (MT) entre au moins un premier (Ra) et un second (Rb) réseau d'accès, les données de changement d'affiliation étant fournies par le gestionnaire de mobilité (MM).

31. Interface selon la revendication 30, dans laquelle les données de changement d'affiliation comprennent des informations représentatives d'un changement de paramètres de communications disponibles par l'intermédiaire du réseau auquel le terminal mobile est affilié.

32. Interface selon la revendication 30 ou 31, dans laquelle, en réponse à un abonnement provenant d'un serveur d'applications, l'interface a pour fonction de communiquer des données de signalisation représentatives du fait que les communications entre les terminaux mobiles et le serveur d'applications par l'intermédiaire d'un réseau d'accès peuvent commencer.

33. Interface selon l'une quelconque des revendications 30, 31 ou 32, dans laquelle des données représentatives d'au moins l'une des données de changement de service et des données de changement d'affiliation peuvent être communiquées entre un serveur d'applications selon l'une quelconque des revendications 11 à 21 et le gestionnaire de mobilité selon l'une quelconque des revendications 22 à 29.

34. Procédé de fourniture d'une fonctionnalité de services de télécommunications à au moins un terminal mobile (MT) par l'intermédiaire d'au moins l'un d'un premier (Ra) et d'un second (Rb) réseaux d'accès, le procédé comprenant :
la fourniture d'un service de télécommunications au terminal mobile (MT) au moins par l'intermédiaire du premier réseau d'accès (Ra) et du second réseau d'accès (Rb) en utilisant un protocole internet en conformité avec un programme d'application,
la commande d'une affiliation du terminal mobile (MT) à au moins l'un du premier (Ra) et du second (Rb) réseau d'accès,
la réception de rapports d'évaluation de réseaux d'accès indiquant un état courant du terminal mobile (MT) et déterminant si une réaffiliation est appropriée en conformité avec les rapports d'évaluation de réseaux d'accès reçus, et
la négociation d'un changement de service de télécommunications du fait d'un changement de paramètres de communications associé au changement d'affiliation du premier (Ra) au second (Rb) réseau d'accès.

35. Procédé selon la revendication 34, dans lequel le changement de paramètres de communications associé à un changement d'affiliation du terminal mobile du premier réseau d'accès au second réseau d'accès est déterminé par le serveur d'applications en conformité avec différents paramètres de communication de données par les premier et second réseaux d'accès.

36. Procédé selon la revendication 34 ou 35, dans lequel, si le changement de paramètres de communications a pour effet de diminuer la qualité du service de télécommunications pouvant être pris en charge, la négociation du changement de service de télécommunications se produit avant le changement d'affiliation du terminal mobile entre les premier et second réseaux d'accès.

37. Procédé selon la revendication 34, 35 ou 36, dans lequel, si le changement de paramètres de communications fournit une fonctionnalité permettant d'augmenter la qualité du service de télécommunications pouvant être pris en charge, la négociation du changement de service de télécommunications se produit après le changement d'affiliation du terminal mobile du premier au second réseau d'accès.

38. Procédé selon l'une quelconque des revendications 34 à 37, dans lequel la négociation comprend :
la détermination d'un service pouvant être pris en charge en conformité avec les paramètres de communications qui sont disponibles par l'intermédiaire d'au moins l'un des premier et second réseaux d'accès, et
le signalement du changement de service au terminal mobile.

39. Procédé selon l'une quelconque des revendications 34 à 38, comprenant :
l'établissement d'une pluralité de services de télécommunications destinés au terminal mobile, qui doivent être fournis en conformité avec une préférence prédéterminée, dans lequel la négociation comprend:
le signalement au terminal mobile du fait que le service courant provenant de cet ensemble sera changé en un autre service provenant de cet ensemble.

40. Procédé selon l'une quelconque des revendications 34 à 39, dans lequel les services de télécommunications comprennent l'un de la visioconférence, de l'audioconférence et de la messagerie de type texte et/ou instantanée, les services étant fournis à une pluralité de terminaux mobiles.

41. Programme informatique ayant des instructions exécutables sur ordinateur qui, lorsqu'elles sont chargées sur un système de traitement de données, configurent ledit système de traitement de données afin qu'il fonctionne en tant qu'appareil de télécommunications selon l'une quelconque des revendications 1 à 10, en tant que serveur d'applications selon l'une quelconque des revendications 11 à 21, en tant que gestionnaire de mobilité selon l'une quelconque des revendications 22 à 29 ou en tant qu'interface selon l'une quelconque des revendications 30 à 33.

42. Programme informatique ayant des instructions exécutables par ordinateur qui, lorsqu'elles sont chargées sur un système de traitement de données provoquent l'exécution par le système de traitement de données du procédé selon l'une quelconque des revendications 34 à 40.

43. Produit à base de programme informatique comportant un support lisible par ordinateur sur lequel sont enregistrés des signaux d'informations représentatifs du programme informatique revendiqué selon la revendication 41 ou 42.
